# EUROPÄISCHE PATENTSCHRIFT

(11) **EP 1 240 205 B1**
(45) Veröffentlichungstag und Bekanntmachung des Hinweises auf die Patenterteilung: **10.03.2004**
(21) Anmeldenummer: 00967867.3
(22) Anmeldetag: 13.10.2000
(51) Int. Cl.: C08F 2/26, C08F 265/10, D04H 1/64

(54) **THERMISCH HÄRTBARE POLYMERDISPERSION**
THERMOHARDENING POLYMER DISPERSION
DISPERSION POLYMERE THERMODURCISSABLE

(30) Priorität: 14.10.1999 DE 19949592
(43) Veröffentlichungstag der Anmeldung: 18.09.2002
(73) Patentinhaber: BASF AKTIENGESELLSCHAFT, 67056 Ludwigshafen (DE)
(72) Erfinder: DREHER, Stefan, 67433 Neustadt (DE); RECK, Bernd, 67269 Grünstadt (DE); SEUFERT, Michael, 67098 Bad Dürkheim (DE); TÜRK, Johannes, 67459 Böhl-Iggelheim (DE)
(74) Vertreter: Kinzebach, Werner, Dr.
(86) Internationale Anmeldenummer: PCT/EP2000/010108
(87) Internationale Veröffentlichungsnummer: WO 2001/027163

(56) Entgegenhaltungen:
- EP-A- 1 018 523
- DE-A- 19 729 161
- AN 96-515029: DOCUMENTATION ABSTRACTS JOURNAL A. PLASTICS, POLYMERS., Bd. 1996, Nr. 51, XP002158223 DERWENT PUBLICATIONS, LONDON., GB & JP 08 269115 A (SANYO CHEM IND KK) 15. Oktober 1996 (1996-10-15)

## Beschreibung

Die vorliegende Erfindung betrifft thermisch härtbare wässrige Polymerdispersionen, hergestellt in Gegenwart eines carboxylgruppenhaltigen Polymerisats, und deren Verwendung als Bindemittel für Formkörper.

Die verfestigung von flächenförmigen Fasergebilden, beispielsweise Faservliesen, Formkörpern, wie Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der Formaldehydemission.

Zur Vermeidung von Formaldehydemissionen wurden bereits zahlreiche Alternativen zu den bisher bekannten Bindemitteln vorgeschlagen. So sind aus der US 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren. Die Wasserfestigkeit der erhaltenen Platten ist jedoch nicht zufriedenstellend.

Aus der EP-A-583 086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden β-Hydroxyalkylamide genannt.

Die EP-A-651 088 beschreibt entsprechende Bindemittel für Substrate aus Cellulosefaser. Diese Bindemittel enthalten zwingend einen phosphorhaltigen Reaktionsbeschleuniger.

Die EP-A-672 920 beschreibt formaldehydfreie Binde-, Imprägnieroder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-22 14 450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Die EP-A-257 567 beschreibt eine Polymerzusammensetzung, die erhältlich ist durch Emulsionspolymerisation von ethylenisch ungesättigten Monomeren, wie Olefine, vinylaromatische Verbindungen, α,β-ethylenisch ungesättigte Carbonsäuren und deren Ester, ethylenisch ungesättigte Dicarbonsäureanhydride und Vinylhalogenide. Während der Polymerisation wird ein in Wasser oder Alkali lösliches oder dispergierbares Harz mit einem zahlenmittleren Molekulargewicht von etwa 500 bis etwa 20.000 zugegeben, um die Fließeigenschaften der Polymerisatzusammensetzung zu beeinflussen. Das Harz ist aus Olefinen, vinylaromatischen Verbindungen, α,β-ethylenisch ungesättigten Carbonsäuren und den Estern davon oder ethylenisch ungesättigten Dicarbonsäureanhydriden aufgebaut. Die Zusammensetzung ist zur Herstellung von formaldehydfreien Beschichtungen von Holzsubstraten brauchbar.

Die EP-A-576 128 beschreibt repulpierbare Klebstoffzusammensetzungen, die eine säurereiche Polymerkomponente und eine säurearme Polymerkomponente enthalten. Die säurearme Polymerkomponente basiert auf einem monomeren Gemisch von 40 bis 95 % eines Alkylacrylats oder -methacrylats und 5 bis 60 % einer ethylenisch ungesättigten Säure, wie Acrylsäure oder Methacrylsäure. Die säurearme Polymerkomponente basiert auf einem Monomergemisch aus 90 bis 100 % eines Alkylacrylats oder Alkylmethacrylats und 0 bis 10 % einer ethylenisch ungesättigten Säure. Die Herstellung der Zusammensetzung erfolgt durch wässrige Emulsionspolymerisation, wobei die säurereiche Polymerkomponente in Anwesenheit der säurearmen Polymerkomponente oder umgekehrt polymerisiert wird. Der pH der Zusammensetzung wird durch Zugabe von Ammoniumhydroxid oder Natriumhydroxid auf den gewünschten Wert eingestellt. Die Zusammensetzung ist als druckempfindlicher Klebstoff, Laminationsklebstoff, Klebstoff für textile Gewebe, Fliesen und Verpakkungen und als Holzleim brauchbar.

Die US-A-5,314,943 beschreibt eine niedrigviskose, rasch härtende, formaldehydfreie Bindemittelzusammensetzung für Textilmaterialien. Die Zusammensetzung umfasst einen Latex, bei dem es sich um ein Copolymer auf Basis einer vinylaromatischen Verbindung und eines konjugierten Diens handelt, und ein wasserlösliches Copolymer, welches durch Copolymerisation eines Gemisches aus wenigstens einer ethylenisch ungesättigten Polycarbonsäure und wenigstens einer olefinischen ungesättigten Monocarbonsäure erhalten wird.

Die US-A-4,868,016 beschreibt eine Zusammensetzung auf Basis von wenigstens einem thermoplastischen, in wässrigem alkalischem Medium unlöslichen Latexpolymer und wenigstens einem alkalilöslichen Polymer, das mit dem Latexpolymer nicht kompatibel ist. Das Latexpolymer ist ein in Wasser dispergiertes Polymer, das aus Acrylsäure- oder Methacrylsäureestern, vinylaromatischen Verbindungen und Vinylestern aufgebaut sein kann und zusätzlich 0,5 bis 3 Gew.-% einer ethylenisch ungesättigten Carbonsäure einpolymerisiert enthält. Auch das alkalilösliche Polymer ist aus den genannten Monomeren aufgebaut, enthält jedoch 10 bis 60 Gew.-% einer ethylenisch ungesättigten Carbonsäure. Sie ist dazu brauchbar, Substrate mit einem Überzug zu versehen.

Es ist bekannt, dass stabile wässrige (Meth)acrylatdispersionen durch Emulsionspolymerisation in Anwesenheit von Schutzkolloiden nur dann erhalten werden, wenn wenigstens 50 % Vinylacetat, bezogen auf Gesamtmonomere, einpolymerisiert werden. Bei weniger als 50 % Vinylacetat erfolgt Agglomeration. Die US 4,670,505 beschreibt zur Lösung dieses Problems eine Polyacrylatdispersion, die durch Emulsionspolymerisation in Anwesenheit von 0,1 bis 5 Gew.-% wenigstens eines wasserlöslichen Aminoalkohols mit 2 bis 36 Kohlenstoffatomen und 0,04 bis 5 Gew.-%, jeweils bezogen auf Gesamtmonomere, eines Schutzkolloids hergestellt wird.

Aus der EP-537910 sind Gemische von Emulsionspolymerisaten, die vorzugsweise aus Styrol und n-Butylacrylat aufgebaut sind, mit säurereichen wasserlöslichen Polymerisaten bekannt, die bei der Verwendung als Bindemittel für Anstriche zu Beschichtungen mit guter Substratbenetzung und hoher Lösemittelbeständigkeit führen sollen.

Aus der US-5 143 582 ist die Herstellung hitzebeständiger Vlies-' materialien unter Verwendung eines thermische aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Die DE-A-197 29 161 beschreibt thermisch härtbare wässrige Polymerdispersionen (Polymerisat 1), hergestellt in Gegenwart eines carboxylgruppenhaltigen Polymerisats (Polymerisat 2) und eines oberflächenaktiven Amins. Zusätzlich können die Dispersionen optional noch ein Alkanolamin mit mindestens zwei Hydroxylgruppen enthalten. Die Herstellung einer Polymerdispersion auf Basis eines Polymerisates 1 durch Polymerisation in Gegenwart eines Polymerisates 2, welches ein Umsetzungsprodukt aus einem ethylenisch ungesättigten Carbonsäureanhydrid und mindestens einem alkoxylierten Alkylamin eingebaut enthält, wird in diesem Dokument nicht beschrieben. Bei der Verwendung der Zusammensetzungen gemäß der DE-A-197 29 161 als thermisch härtbares Bindemittel für faserige und körnige Substrate ist deren niedrige Viskosität bei hohem Feststoffgehalt vorteilhaft. Es werden Formteile mit guter mechanischer Festigkeit erhalten, deren Formbeständigkeit im Feuchtklima jedoch noch verbesserungswürdig ist. Darüber hinaus ist die kolloidale Stabilität dieser Polymerdispersionen sehr gering, bei Verdünnung mit Wasser wird häufig bereits eine Agglomeration bzw. Koagulation beobachtet.

Die unveröffentlichte deutsche Patentanmeldung mit dem Aktenzeichen P 199 00 459.5 beschreibt eine ähnliche Polymerdispersion, wobei die dispergierten Polymerisatteilchen jedoch einen höheren Gehalt an α,β-ethylenisch ungesättigten Carbonsäuren besitzen.

Die unveröffentlichte deutsche Patentanmeldung mit dem Aktenzeichen P 199 00 460.9 beschreibt eine Polymerdispersion, enthaltend i) in einem wässrigen Medium dispergierte Polymerpartikel aus Einheiten ethylenisch ungesättigter Monomere, ii) einen wasserlöslichen polymeren Polyelektrolyten, der entlang eines polymeren Gerüstes eine Vielzahl ionischer Gruppen einheitlichen Ladungscharakters oder hierzu ionisierbarer Gruppen trägt, und iii) ein ionisches Tensid, das eine ionische Gruppe mit zu dem polymeren Polyelektrolyten entgegengesetztem Ladungscharakter oder eine hierzu ionisierbare Gruppe trägt. Der Polyelektrolyt ist bevorzugt aus Einheiten ethylenisch ungesättigter Monomere, beispielsweise ethylenisch ungesättigten Mono- oder Dicarbonsäuren und Einheiten N-substituierter Amide derartiger Säuren, aufgebaut, wobei keine alkoxylierten Amide offenbart sind. Die Polymerdispersion kann durch einfaches Verdünnen mit Wasser koaguliert werden.

Der vorliegenden Erfindung liegt die Aufgabe zugrunde, formaldehydfreie Bindemittel für Substrate, wie z. B. Formkörper bereitzustellen. Diese Bindemittel sollen sich vorzugsweise für faserige und körnige Substrate eignen. Insbesondere sollen sie dem Substrat eine hohe mechanische Festigkeit und Formbeständigkeit auch im Feuchtklima verleihen. Bevorzugt soll das Bindemittel eine hohe kolloidale Stabilität und/oder eine geringe Viskosität bei hohem Feststoffgehalt aufweisen. Das Bindemittel soll mit Wasser oder verdünnten Salz- bzw. Tensid-Lösungen möglichst unbegrenzt verdünnbar sein, ohne dass es zu einem Koagulieren der Latex-Partikel kommt.

Aufgabe der Erfindung ist es weiterhin, ein Verfahren zur Herstellung einer solchen thermisch härtbaren Polymerdispersion bereitzustellen.

Aufgabe der Erfindung ist es außerdem, unter Verwendung einer derartig thermisch härtbaren Polymerdispersion hergestellte Substrate bereitzustellen.

Die Aufgabe wird überraschenderweise gelöst durch eine wässrige Polymerdispersion, enthaltend dispergierte Polymerteilchen mindestens eines Polymerisats A1, das erhältlich ist durch radikalische Emulsionspolymerisation in Gegenwart eines Polymerisats A2, das aufgebaut ist aus
- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers.

Im Zusammenhang mit den Monomerkomponenten des Polymerisats A1 steht Alkyl im Folgenden vorzugsweise für geradkettige oder verzweigte C₁-C₂₂-Alkylreste, insbesondere C₁-C₁₂- und besonders bevorzugt C₁-C₆-Alkylreste, wie Methyl, Ethyl, n-Propyl, n-Butyl, sek.-Butyl, tert.-Butyl, n-Pentyl, n-Hexyl, 2-Ethylhexyl, n-Dodecyl oder n-Stearyl.
Hydroxyalkyl steht vorzugsweise für Hydroxy-C₁-C₆-alkyl, wobei die Alkylreste geradkettig oder verzweigt sein können, und insbesondere für 2-Hydroxyethyl, 2- oder 3-Hydroxypropyl, 2-Methyl-2-hydroxypropyl und 4-Hydroxybutyl.
Cycloalkyl steht vorzugsweise für C₅-C₇-Cyclohexyl, insbesondere Cyclopentyl und Cyclohexyl.
Aryl steht vorzugsweise für Phenyl oder Naphthyl.

Das Polymerisat A1 stellt ein radikalisches Emulsionspolymerisat dar. Zu dessen Herstellung können alle durch radikalische Polymerisation polymerisierbaren Monomere eingesetzt werden. Im Allgemeinen ist das Polymerisat aufgebaut aus
- 80 bis 100 Gew.-%, bevorzugt 85 bis 99,9 Gew.-%, bezogen auf das Gesamtgewicht der Monomere für das Polymerisat, wenigstens eines ethylenisch ungesättigten Hauptmonomeren sowie
- 0 bis 20 Gew.-%, bevorzugt 0,1 bis 15 Gew.-%, bezogen auf das Gesamtgewicht der Monomere für das Polymerisat, wenigstens eines ethylenisch ungesättigten Comonomeren.

Das Hauptmonomer ist vorzugsweise ausgewählt unter
- Estern aus vorzugsweise 3 bis 6 C-Atomen aufweisenden α,β-monoethylenisch ungesättigten Mono- oder Dicarbonsäure, wie Acrylsäure, Methacrylsäure, Maleinsäure, Fumarsäure und Itaconsäure mit C₁-C₁₂-, vorzugsweise C₁-C₈-Alkanolen. Derartige Ester sind insbesondere Methyl-, Ethyl-, n-Butyl-, Isobutyl-, tert-Butyl-, n-Pentyl-, iso-Pentyl- und 2-Ethylhexylacrylat und/oder -methacrylat;
- vinylaromatischen Verbindungen, bevorzugt Styrol, α-Methylstyrol, o-Chlorstyrol, Vinyltoluolen und Mischungen davon;
- Vinylestern von C₁-C₁₈-Mono- oder Dicarbonsäuren, wie Vinylacetat, Vinylpropionat, Vinyl-n-butyrat, Vinyllaurat und/oder Vinylstearat;
- Butadien;
- linearen 1-Olefinen, verzweigtkettigen 1-Olefinen oder cyclischen Olefinen, wie z. B. Ethen, Propen, Buten, Isobuten, Penten, Cyclopenten, Hexen oder Cyclohexen. Des Weiteren sind auch Metallocen-katalysiert hergestellte Oligoolefine mit endständiger Doppelbindung, wie z. B. Oligopropen oder Oligohexen geeignet;
- Acrylnitril, Methacrylnitril;
- Vinyl- und Allylalkylethern mit 1 bis 40 Kohlenstoffatomen im Alkylrest, wobei der Alkylrest noch weitere Substituenten, wie eine oder mehrere Hydroxylgruppen, eine oder mehrere Amino- oder Diaminogruppen oder eine bzw. mehrere Alkoxylatgruppen tragen kann, wie z. B. Methylvinylether, Ethylvinylether, Propylvinylether und 2-Ethylhexylvinylether, Isobutylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Besonders bevorzugte Hauptmonomere sind Styrol, Methylmethacrylat, n-Butylacrylat, Ethylacrylat, 2-Ethylhexylacrylat, Vinylacetat, Ethen und Butadien.

Das Comonomer ist vorzugsweise ausgewählt unter
- ethylenisch ungesättigten Mono- oder Dicarbonsäuren oder deren Anhydriden, vorzugsweise Acrylsäure, Methacrylsäure, Methacrylsäureanhydrid, Maleinsäure, Maleinsäureanhydrid, Fumarsäure und/oder Itaconsäure;
- Acrylamiden und alkylsubstituierten Acrylamiden, wie z. B. Acrylamid, Methacrylamid, N,N-Dimethylacrylamid, N-Methylolmethacrylamid, N-tert.-Butylacrylamid, N-Methylmethacrylamid und Mischungen davon;
- sulfogruppenhaltigen Monomeren, wie z. B. Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalzen bzw. deren Mischungen sowie Sulfopropylacrylat und/oder Sulfopropylmethacrylat;
- C₁-C₄-Hydroxyalkylestern von C₃-C₆-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxylierten Derivate oder Estern von mit 2 bis 50 Mol Ethylenoxid, Propylenoxid, Butylenoxid oder Mischungen davon alkoxylierten C₁-C₁₈-Alkoholen mit den erwähnten Säuren, wie z. B. Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen;
- Vinylphosphonsäuren und deren Salzen, Vinylphosphonsäuredimethylester und anderen phosphorhaltigen Monomeren;
- Alkylaminoalkyl(meth)acrylaten oder Alkylaminoalkyl(meth)acrylamiden oder deren Quarternisierungsprodukten, wie z. B. 2-(N,N-Dimethylamino)-ethyl(meth)acrylat oder 2-(N,N,N-Trimethylammonium)-ethylmethacrylat-chlorid, 3-(N,N-Dimethyl-amino)-propyl(meth)acrylat, 2-Dimethylaminoethyl(meth)acrylamid, 3-Dimethylaminopropyl(meth)acrylamid, 3-Trimethylammoniumpropyl(meth)acrylamid-chlorid und Mischungen davon;
- Allylestern von C₁-C₃₀-Monocarbonsäuren;
- N-Vinylverbindungen, wie N-Vinylformamid, N-Vinyl-N-methylformamid, N-Vinylpyrrolidon, N-Vinylimidazol, 1-Vinyl-2-methyl-imidazol, 1-Vinyl-2-methylimidazolin, 2-Vinylpyridin, 4-Vinylpyridin, N-Vinylcarbazol und/oder N-Vinylcaprolactam;
- Diallyldimethylammoniumchlorid, Vinylidenchlorid, Vinylchlorid, Acrolein, Methacrolein;
- 1,3-Diketogruppen enthaltenden Monomeren, wie z. B. Acetoacetoxyethyl(meth)acrylat oder Diacetonacrylamid, harnstoffgruppenhaltigen Monomeren, wie Ureidoethyl(meth)acrylat, Acrylamidoglykolsäure, Methacrylamidoglykolatmethylether;
- Silylgruppen enthaltenden Monomeren, wie z. B. Trimethoxysilylpropylmethacrylat;
- Glycidylgruppen enthaltenden Monomeren, wie z. B. Glycidylmethacrylat.

Besonders bevorzugte Comonomere sind Hydroxyethylacrylat, Hydroxypropylacrylat, Hydroxybutylacrylat, Hydroxyethylmethacrylat und Mischungen davon. Ganz besonders bevorzugt sind Hydroxyethylacrylat und Hydroxyethylmethacrylat, insbesondere in Mengen von 2 bis 20 Gew.-%, bezogen auf das Gesamtmonomere A1.

Das Polymerisat A2 enthält 50 bis 99,5 Gew.-%, bevorzugt 70 bis 99 Gew.-%, solcher Strukturelemente eingebaut, die sich von mindestens einer ethylenisch ungesättigten Mono- oder Dicarbonsäure ableiten. Diese Säuren können in dem Polymerisat gewünschtenfalls auch teilweise oder vollständig in Form eines Salzes vorliegen. Bevorzugt ist die saure Form.

Vorzugsweise ist das Polymerisat A2 zu mehr als 10 g/l (bei 25 °C) in Wasser löslich.

Brauchbare ethylenisch ungesättigte Carbonsäuren wurden bereits vorstehend im Zusammenhang mit dem Polymerisat A1 genannt. Bevorzugte Carbonsäuren sind C₃- bis C₁₀-Monocarbonsäuren und C₄- bis C₈-Dicarbonsäuren, insbesondere Acrylsäure, Methacrylsäure, Crotonsäure, Fumarsäure, Maleinsäure, 2-Methylmaleinsäure und/oder Itaconsäure. Besonders bevorzugt sind Acrylsäure, Methacrylsäure, Maleinsäure und Mischungen davon. Bei der Herstellung des Polymerisats A2 können selbstverständlich auch anstelle der Säuren oder zusammen mit den Säuren deren Anhydride, wie Maleinsäureanhydrid, Acrylsäure- oder Methacrylsäureanhydrid eingesetzt werden.

Das Polymerisat A2 enthält ferner 0,5 bis 50 Gew.-%, bevorzugt 1 bis 30 Gew.-%, wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit mindestens einem hydroxylgruppenhaltigen Amin, in einpolymerisierter Form.

Das Polymer A2 liegt vorzugsweise als Kammpolymer mit kovalent gebundenen Aminseitenketten vor.

Als Komponente der Ester geeignete Monocarbonsäuren sind die zuvor genannten C₃- bis C₁₀-Monocarbonsäuren, insbesondere Acrylsäure, Methacrylsäure, Crotonsäure, und Mischungen davon.

Als Komponente der Halbester und Diester geeignete Dicarbonsäuren sind die zuvor genannten C₄- bis C₈-Dicarbonsäuren, insbesondere Fumarsäure, Maleinsäure, 2-Methylmaleinsäure, Itaconsäure, und Mischungen davon.

Vorzugsweise ist das Amin mit mindestens einer Hydroxylgruppe ausgewählt unter sekundären und tertiären Aminen, die wenigstens einen C₆- bis C₂₂-Alkyl-, C₆- bis C₂₂-Alkenyl-, Aryl-C₆- bis C₂₂-alkyl- oder Aryl-C₆- bis C₂₂-alkenylrest aufweisen, wobei die Alkenylgruppe 1, 2 oder 3 nicht benachbarte Doppelbindungen aufweisen kann.

Vorzugsweise ist das Amin hydroxyalkyliert und/oder alkoxyliert. Alkoxylierte Amine weisen vorzugsweise einen oder zwei Alkylenoxidreste mit terminalen Hydroxylgruppen auf. Vorzugsweise weisen die Alkylenoxidreste je 1 bis 100, bevorzugt je 1 bis 50, gleiche oder verschiedene Alkylenoxideinheiten, statistisch verteilt oder in Form von Blöcken auf. Bevorzugte Alkylenoxide sind Ethylenoxid, Propylenoxid und/oder Butylenoxid. Besonders bevorzugt ist Ethylenoxid.

Bevorzugt enthält das Polymerisat A2 eine ungesättigte Verbindung auf Basis einer Aminkomponente eingebaut, die wenigstens ein Amin der allgemeinen Formel

R^{c}NR^{a}R^{b}

enthält, wobei
- R^{c}: für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder 3 nicht benachbarte Doppelbindungen aufweisen kann,
- R^{a}: für Hydroxy-C₁-C₆-alkyl oder einen Rest der Formel II

-(CH₂CH₂O)ₓ(CH₂CH(CH₃)O)_{y}-H (II)

steht, wobei
in der Formel II die Reihenfolge der Alkylenoxideinheiten beliebig ist und x und y unabhängig voneinander für eine ganze Zahl von 0 bis 100, bevorzugt 0 bis 50, stehen, wobei die Summe aus x und y > 1 ist,
- R^{b}: für Wasserstoff, C₁- bis C₂₂-Alkyl, Hydroxy-C₁-C₆-alkyl, C₆- bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann, oder R^{b} für einen Rest der Formel III

-(CH₂CH₂O)ᵥ(CH₂CH(CH₃)O)_{w}-H (III)

steht, wobei
in der Formel III die Reihenfolge der Alkylenoxideinheiten beliebig ist und v und w unabhängig voneinander für eine ganze Zahl von 0 bis 100, vorzugsweise 0 bis 50, stehen.

Bevorzugt steht R^{c} für C₈- bis C₂₀-Alkyl oder C₈- bis C₂₀-Alkenyl, wobei der Alkenylrest 1,2 oder 3 nicht benachbarte Doppelbindungen aufweisen kann. Vorzugsweise steht R^{c} für den Kohlenwasserstoffrest einer gesättigten oder ein- oder mehrfach ungesättigten Fettsäure. Bevorzugte Reste R^{c} sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Besonders bevorzugt handelt es sich bei der Aminkomponente um ein alkoxyliertes Fettamin oder ein alkoxyliertes Fettamingemisch. Besonders bevorzugt sind die Ethoxylate. Insbesondere werden Alkoxylate von Aminen auf Basis natürlich vorkommender Fettsäuren eingesetzt, wie z. B. Talgfettamine, die überwiegend gesättigte und ungesättigte C₁₄-, C₁₆- und C₁₈-Alkylamine enthalten oder Kokosamine, die gesättigte, einfach und zweifach ungesättigte C₆-C₂₂-, vorzugsweise C₁₂-C₁₄-Alkylamine enthalten. Zur Alkoxylierung geeignete Amingemische sind z. B. verschiedene Armeen®-Marken der Fa. Akzo oder Noram®-Marken der Fa. Ceca.

Geeignete, kommerziell erhältliche alkoxylierte Amine sind z. B. die Noramox®-Marken der Fa. Ceca, bevorzugt ethoxylierte Oleylamine, wie Noramox® 05 (5 EO-Einheiten), sowie die unter der Marke Lutensol®FA vertriebenen Produkte der Fa. BASF AG.

Die Einpolymerisierung der vorgenannten Ester, Halbester und Diester bewirkt im Allgemeinen eine ausgeprägte Stabilisierung der erfindungsgemäßen Polymerdispersion. Die erfindungsgemäßen Polymerdispersionen behalten ihre kolloidale Stabilität der Latexpartikel bei Verdünnung mit Wasser oder verdünnten Elektrolyten oder Tensidlösungen zuverlässig bei.

Die Veresterung zur Herstellung der zuvor beschriebenen Ester, Halbester und Diester erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und (C₁- bis C₄)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200 °C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil der Esterbildung kann mittels Infrarotspektroskopie ermittelt werden.

Nach einer bevorzugten Ausführungsform erfolgt die Herstellung der ungesättigten Ester, Halbester oder Diester und deren weitere Umsetzung zu den erfindungsgemäß eingesetzten Polymerisaten A2 ohne Zwischenisolierung der Ester und vorzugsweise nacheinander im selben Reaktionsgefäß.

Bevorzugt wird zur Herstellung der Polymerisate A2 ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Neben den Bestandteilen Carbonsäure sowie Ester, Halbester und/oder Diester kann das Polymerisat A2 noch 0 bis 20 Gew.-%, bevorzugt 0,1 bis 10 Gew.-%, andere Monomere einpolymerisiert enthalten. Brauchbare Monomere sind die im Zusammenhang mit dem Polymerisat A1 genannten Monomere, wobei Vinylaromaten, wie Styrol, Olefine, beispielsweise Ethylen, oder (Meth)acrylsäureester wie Methyl(meth)acrylat, Ethyl(meth)acrylat, n-Butyl(meth)acrylat, 2-Ethylhexyl(meth)acrylat und Mischungen davon besonders bevorzugt sind.

Die Herstellung der Polymerisate A2 erfolgt vorzugsweise durch radikalische Polymerisation in Substanz oder in Lösung. Geeignete Lösungsmittel für die Lösungsmittelpolymerisation sind z. B. Wasser, mit Wasser mischbare organische Lösungsmittel, wie Alkohole und Ketone, beispielsweise Methanol, Ethanol, n-Propanol, Isopropanol, n-Butanol, Aceton, Methylethylketon etc., und Mischungen davon. Geeignete Polymerisationsinitiatoren sind beispielsweise Peroxide, Hydroperoxide, Peroxodisulfate, Percarbonate, Peroxoester, Wasserstoffperoxid und Azoverbindungen, wie sie im Folgenden für die Herstellung der erfindungsgemäßen Polymerdispersionen näher beschrieben werden. Die Polymerisate A2 können gewünschtenfalls separat hergestellt und nach üblichem Verfahren isoliert und/oder gereinigt werden. Bevorzugt werden die Polymerisate A2 unmittelbar vor der Herstellung der erfindungsgemäßen Polymerdispersionen hergestellt und ohne Zwischenisolierung für die Dispersionspolymerisation eingesetzt.

Die Herstellung der Polymerisate A2 kann vorteilhaft auch durch polymeranaloge Umsetzung erfolgen. Dazu kann ein Polymerisat, das 80 bis 100 Gew.-% mindestens einer ethylenisch ungesättigten Mono- und/oder Dicarbonsäure sowie 0 bis 20 Gew.-% der zuvor genannten anderen Polymere eingebaut enthält, mit mindestens einem hydroxylgruppenhaltigen Amin umgesetzt werden.

Geeignete ethylenisch ungesättigte Mono- und Dicarbonsäuren sind die zuvor als Komponente der Polymerisate A1 und A2 genannten. Geeignete Amine, die wenigstens eine Hydroxylgruppe aufweisen, sind ebenfalls die zuvor genannten. Die Säuren können in dem zur polymeranalogen Umsetzung eingesetzten Polymerisat gewünschtenfalls teilweise oder vollständig in Form eines Derivates, bevorzugt eines C₁- bis C₆-Alkylesters, vorliegen.

Die Herstellung der Polymerisate A2 durch polymeranaloge Umsetzung erfolgt vorzugsweise in einem geeigneten nichtwässrigen Lösungsmittel oder in Substanz. Bei der Umsetzung in Substanz kann die Aminkomponente gegebenenfalls im Überschuss eingesetzt werden, um als Lösungsmittel zu dienen. Bevorzugt sind Lösungsmittel, die mit Wasser ein Azeotrop bilden und somit eine einfache Entfernung des bei der Reaktion gebildeten Wassers ermöglichen. Vorzugsweise erfolgt die Umsetzung in Gegenwart eines Veresterungskatalysators, wie zuvor beschrieben. Die Reaktionstemperatur liegt bevorzugt in einem Bereich von 100 bis 200 °C. Bei der Reaktion gebildetes Wasser kann durch geeignete Maßnahmen, wie z. B. Abdestillieren, entfernt werden.

Das Gewichtsverhältnis von Polymerisat A1 zu Polymerisat A2, auf Feststoffbasis, liegt vorzugsweise im Bereich von 7:1 bis 1:7, insbesondere 3:1 bis 1:3.

Neben den Polymerisaten A1 und A2 können die erfindungsgemäßen Latices noch 0 bis 50 Gew.-%, bevorzugt 0,1 bis 40 Gew.-%, bezogen auf das Polymerisat A2, mindestens eines oberflächenaktiven, alkoxylierten, bevorzugt ethoxylierten oder propoxylierten, Alkylamins enthalten. Bevorzugte Alkylamine sind die Alkylamine der Formel R^{c}NR^{a}R^{b}, wie zuvor definiert, die auch in dem Polymerisat A2 enthalten sind, wobei Alkylamine der Formel 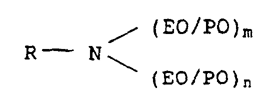 in der R ein Alkyl-, Alkenyl- oder Alkylvinylrest mit mindestens 6 Kohlenstoffatomen darstellt und m und n unabhängig voneinander ≥ 1 sind, besonders bevorzugt sind. Bevorzugte Reste R weisen 8 bis 22 Kohlenstoffatome auf.

Die in dem Polymerisat A2 enthaltenen alkoxylierten Alkylamine und die zusätzlichen Alkylamin-Vernetzer können gleiche oder verschiedene Verbindungen sein.

Gewünschtenfalls kann die erfindungsgemäße Polymerdispersion noch weitere Vernetzer enthalten, beispielsweise einen Amin- oder Amid-Vernetzer mit mindestens zwei Hydroxylgruppen. Geeignete Vernetzer sind insbesondere die in der DE 197 29 161 offenbarten Alkanolamine, die hiermit durch Bezugnahme zum Offenbarungsgehalt der vorliegenden Erfindung gemacht werden.

Als Vernetzer eignen sich weiter vorzugsweise β-Hydroxyalkylamine der Formel 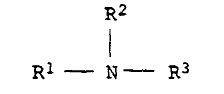 wobei R¹ für ein H-Atom, eine C₁- bis C₁₀-Alkylgruppe, eine C₁bis C₁₀-Hydroxyalkylgruppe oder einen Rest der Formel IV

-(CH₂CH₂O)ₓ(CH₂CH(CH₃)O)_{y}-H (IV)

steht, wobei
in der Formel IV die Reihenfolge der Alkylenoxideinheiten beliebig ist und x und y unabhängig voneinander für eine ganze Zahl von 0 bis 100 stehen, wobei die Summe aus x und y > 1 ist und R² und R³ unabhängig voneinander für eine C₁- bis C₁₀-Hydroxyalkylgruppe stehen.

Besonders bevorzugt stehen R² und R³ unabhängig voneinander für eine C₂- bis C₅-Hydroxyalkylgruppe und R¹ für ein H-Atom, eine C₁bis C₅-Alkylgruppe oder eine C₂- bis C₅-Hydroxyalkylgruppe.

Besonders bevorzugt sind Diethanolamin, Triethanolamin, Diisopropanolamin, Triisopropanolamin, Methyldiethanolamin, Butyldiethanolamin und Methyldiisopropanolamin, insbesondere Triethanolamin.

Weitere bevorzugte β-Hydroxyalkylamine sind die in der DE 196 21 573 als Komponente A offenbarten Amine, die hiermit durch Bezugnahme zum Offenbarungsgehalt der vorliegenden Erfindung gemacht werden. Dazu zählen vorzugsweise lineare oder verzweigte aliphatische Verbindungen, die pro Molekül mindestens zwei funktionelle Aminogruppen vom Typ (a) oder (b) aufweisen 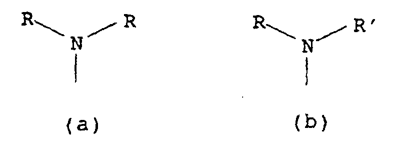 worin R für Hydroxyalkyl steht und R' für Alkyl steht, ist, bevorzugt eine Verbindung der Formel I 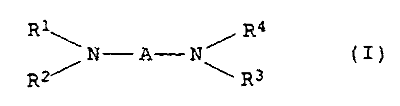 worin
- A: für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen,
und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert sein kann, wobei R⁶ und R⁷ die oben angegebenen Bedeutungen besitzen, steht;
oder A für einen Rest der Formel steht: 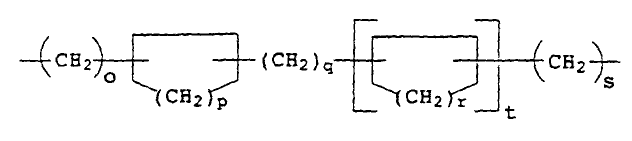 worin
- o, q und s: unabhängig voneinander für 0 oder eine ganze Zahl von 1 bis 6 stehen,
- p und r: unabhängig voneinander für 1 oder 2 stehen und
- t: für 0,1 oder 2 steht,
wobei die cycloaliphatischen Reste auch durch 1, 2 oder 3 Alkylreste substituiert sein können und
- R¹, R² und R³ und R⁴: unabhängig voneinander für H, Hydroxyalkyl, Alkyl oder Cycloalkyl stehen.

Bevorzugte höherfunktionelle β-Hydroxyalkylamine sind insbesondere mindestens zweifach ethoxylierte Amine mit einem Mol-Gewicht von unter 1 000 g/mol, wie z. B. Diethanolamin, Triethanolamin und ethoxyliertes Diethylentriamin, bevorzugt stöchiometrisch ethoxyliertes Diethylentriamin, d. h. Diethylentriamin, worin alle NH-Wasserstoffatome im Mittel einfach ethoxyliert sind.

Gut geeignete zusätzliche Vernetzer sind auch β-Hydroxyalkylamide, bevorzugt die in der US-5 143 582 genannten β-Hydroxyalkylamide der Formel

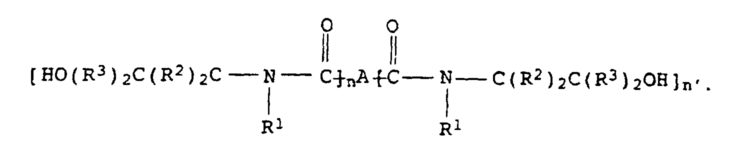

Besonders bevorzugt sind die β-Hydroxyalkylamide der vorstehenden Formel, in der R¹ Wasserstoff, eine kurzkettige Alkylgruppe oder HO(R³)₂C(R²)₂C-, n und n' jeweils 1, -A- eine -(CH₂)ₘ-Gruppe, m 0 bis 8, bevorzugt 2 bis 8, R² jeweils Wasserstoff, und eine der R³-Gruppen jeweils Wasserstoff und die andere Wasserstoff oder C₁-C₅-Alkyl sind. Besonders bevorzugt ist Bis[N,N-di(2-hydroxyethyl)]adipinsäureamid.

Die Zugabe des Vernetzers bewirkt im Allgemeinen eine bessere Härtung der erfindungsgemäßen Zusammensetzungen bei gegebener Härtungstemperatur bzw. eine Aushärtung bei niedriger Temperatur bei vorgegebener Härtungszeit. Der Gewichtsanteil des Vernetzers relativ zur Summe aus Polymerisat A1 und A2 beträgt 0 bis 30 Gew.-%, vorzugsweise 0,1 bis 15 Gew.-%.

Weiterhin kann den erfindungsgemäßen Polymerdispersionen ein Reaktionsbeschleuniger zugesetzt werden. Bevorzugt sind dabei phosphorhaltige Verbindungen, insbesondere hypophosphorige Säure sowie deren Alkali- und Erdalkalisalze oder Alkali-Tetrafluoroborate. Auch Salze von Mn(II), Ca(II), Zn(II), Al(III), Sb(III) oder Ti(IV) oder starke Säuren, wie para-Toluolsulfonsäure, Trichloressigsäure und Chlorsulfonsäure, können als Reaktionsbeschleuniger zugesetzt werden. Der Gewichtsanteil des Reaktionsbeschleuniger relativ zur Summe aus Polymerisat A1 und A2 beträgt 0,1 bis 5 Gew.-%, vorzugsweise 0,1 bis 2 Gew.-%.

Besonders bevorzugte Zusammensetzungen der erfindungsgemäßen Polymerdispersionen sind

| | |
|---|---|
| 70 bis 50 Gew.-% | Polymerisat A1, |
| 30 bis 50 Gew.-% | Polymerisat A2 und gegebenenfalls |
| 0 bis 10 Gew.-% | oberflächenaktives alkoxyliertes Alkylamin, |
| 0 bis 20 Gew.-% | hydroxylgruppenhaltiger Vernetzer, |
| 0 bis 5 Gew.-% | Reaktionsbeschleuniger. |

Ein weiterer Gegenstand der Erfindung ist ein Verfahren zur Herstellung einer wässrigen Polymerdispersion, wie zuvor beschrieben, wobei man wenigstens ein ethylenisch ungesättigtes Monomer durch radikalische Emulsionspolymerisation zu einem Polymerisat A1 umsetzt und wobei die Polymerisation in Gegenwart wenigstens eines Polymerisats A2 erfolgt.

Die Herstellung der erfindungsgemäßen Polymerdispersion erfolgt vorzugsweise durch wässrige Emulsionspolymerisation, wobei eine batch-, eine semi-kontinuierliche oder eine kontinuierliche Fahrweise möglich ist. Es erwies sich als vorteilhaft, das Polymerisat A2 zusammen mit den Monomeren des Polymerisats A1 in Form eines Emulsionszulaufes in das Reaktionsgefäß zuzudosieren. Gewünschtenfalls können die das Polymerisat A1 bildenden Monomere und das Polymerisat A2 teilweise oder vollständig über zwei oder mehrere getrennte Zuläufe dem Reaktionsgefäß zugeführt werden. Die Monomeren können sowohl in voremulgierter als auch in nichtvoremulgierter Form dem Reaktionsgefäß zugeführt werden. Nach einer bevorzugten Ausführungsform wird wenigstens ein Teil des Polymerisats A2 zusammen mit wenigstens einer Monomerkomponente von A1 dem Reaktionsgefäß zugeführt. Vorteilhafterweise werden dabei im Allgemeinen erfindungsgemäße wässrige Polymerdispersionen erhalten, die eine geringere Viskosität aufweisen, als herkömmliche Dispersionen. Das Polymerisat A2 kann teilweise oder vollständig als Reaktorvorlage verwendet werden. Die Verwendung einer definierten Menge eines Saat-Latex als Reaktorvorlage ist für die erfindungsgemäßen Polymerdispersionen vorteilhaft zur gezielten Einstellung einer Teilchengrößenverteilung. Dabei können 0 bis 25 Gew.-%, bevorzugt 0,1 bis 10 Gew.-%, bezogen auf das Polymerisat A1, eines geeigneten Saat-Latex Verwendung finden.

Die Herstellung der Polymerdispersion erfolgt in der Regel in Wasser als Dispergiermedium. Es können jedoch auch mit Wasser mischbare organische Lösungsmittel, wie Alkohole und Ketone, beispielsweise Methanol, Ethanol, n-Propanol, iso-Propanol, n-Butanol, Aceton oder Methylethylketon, bis zu einem Anteil von etwa 30 Vol.-% enthalten sein.

Das Polymerisat A1 wird also durch wässrige Emulsionspolymerisation in Gegenwart des Polymerisats A2 und, sofern enthalten, bevorzugt in Gegenwart eines oberflächenaktiven Amins, wie zuvor beschrieben, hergestellt.

vorzugsweise werden den erfindungsgemäßen Dispersionen keine zusätzlichen Emulgatoren zugesetzt.

Die Polymerisation wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z. B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z. B. Mischungen aus Wasserstoffperoxid und Natriumperoxidisulfat. Für die Polymerisation in wässrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden im Allgemeinen in Mengen von 0,05 bis 5 Gew.-%, bezogen auf die Monomere, eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z. B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäureund Methacrylsäureester von Alkoholen mit mehr als 2 OH-Gruppen können als Vernetzer eingesetzt werden, z. B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9.000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z. B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z. B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Zusätzlich zu den genannten Bestandteilen können die erfindungsgemäßen Zusammensetzungen übliche Zusätze je nach Anwendungszweck enthalten.

Die in der erfindungsgemäßen Zusammensetzung gegebenenfalls zusätzlich enthaltenen Komponenten werden nach dem Ende der Emulsionspolymerisation zugegeben.

Weiter können die erfindungsgemäßen Zusammensetzungen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten.

Schließlich können die erfindungsgemäßen Zusammensetzungen übliche Brandschutzmittel, wie z. B. Aluminiumsilikate, Aluminiumhydroxide, Borate und/oder Phosphate enthalten.

Häufig enthalten die Zusammensetzungen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die erfindungsgemäßen Zusammensetzungen können auch in Abmischung mit anderen Bindemitteln, wie beispielsweise Harnstoff-Formaldehyd-Harzen, Melamin-Formaldehyd-Harzen oder Phenol-Formaldehyd-Harzen, sowie mit Epoxidharzen eingesetzt werden.

Die erfindungsgemäßen Zusammensetzungen sind formaldehydfrei. Formaldehydfrei bedeutet, dass die erfindungsgemäßen Zusammensetzungen keine wesentlichen Mengen an Formaldehyd enthalten und auch bei Trocknung und/oder Härtung keine wesentlichen Mengen an Formaldehyd freigesetzt werden. Im Allgemeinen enthalten die Zusammensetzungen < 100 ppm Formaldehyd. Sie ermöglichen die Herstellung von Formkörpern mit kurzer Härtungszeit und verleihen den Formkörpern ausgezeichnete mechanische Eigenschaften.

Die erfindungsgemäßen thermisch härtbaren, formaldehydfreien Zusammensetzungen sind vor der Anwendung im Wesentlichen unvernetzt und daher thermoplastisch. Wenn erforderlich, kann jedoch ein geringer Grad an Vorvernetzung des Polymerisats A1 eingestellt werden, z. B. durch Verwendung von Monomeren mit zwei oder mehr polymerisierbaren Gruppen.

Die erfindungsgemäßen Dispersionen bestehend im Wesentlichen aus feinteiligen Emulsionspolymerisatteilchen von A1 und einer wässrigen Phase, enthaltend das Polymerisat A2 sowie gegebenenfalls separat zugesetztes oder bei der Veresterung nicht umgesetztes Amin, sowie gegebenenfalls weitere wasserlösliche Additive, z. B. Vernetzer.

Dabei kann es in der wässrige Phase zur Ausbildung von Überstrukturen kommen, wie z. B. von durch lamellare oder kugelförmige Aggregate gebildeten lyotropen Phasen.

Die Monomerzusammensetzung wird im Allgemeinen so gewählt, dass für das Polymerisat A1 eine Glasübergangstemperatur Tg im Bereich von -60 °C bis +150 °C resultiert. Die Glasübergangstemperatur Tg der Polymerisate kann in bekannter Weise z. B. mittels Differential Scanning Calorimetry (DSC) ermittelt werden. Die Tg kann auch mittels der Fox-Gleichung näherungsweise berechnet werden. Nach Fox T. G., Bull. Am. Physics Soc. 1,3, page 123 (1956) gilt: l/Tg = x₁/Tg₁ + x₂/Tg₂ + ... + xₙ/Tgₙ, wobei xₙ für den Massebruch (Gew.-%/100) des Monomers n steht, und Tgₙ die Glasübergangstemperatur in Kelvin des Homopolymers des Monomeren n ist. Tg-Werte für Homopolymerisate sind in Polymer Handbook 3rd Edition, J. Wiley & Sons, New York (1989) aufgeführt. Für die Weiterverarbeitung zu Faserdämmplatten werden bevorzugt Polymerisate A1 mit einer Glasübergangstemperatur im Bereich von 60 bis 120 °C eingesetzt. Für die Weiterverarbeitung zu Korkprodukten liegt die Glasübergangstemperatur vorzugsweise in einem Bereich von -50 bis 90 °C.

Die erfindungsgemäßen Polymerdispersionen stellen feinteilige, stabile Latices dar. Die gewichtsmittlere Teilchengröße der Latexpartikel beträgt etwa 10 bis 1 500 nm, bevorzugt 20 bis 1 000 nm, besonders bevorzugt 30 bis 500 nm, gemessen mit Hilfe der analytischen Ultrazentrifuge (AUZ).

Die erfindungsgemäßen Polymerdispersionen können mit Wasser oder verdünnten Salz- bzw. Tensid-Lösungen unbegrenzt verdünnt werden, ohne dass es zu einem Koagulieren der Latex-Partikel kommt. Die erfindungsgemäßen Zusammensetzungen haben einen Gehalt an nicht flüchtigen Anteilen (Feststoffgehalt) im Bereich von etwa 20 bis 75 Gew.-%, bevorzugt 25 bis 65 Gew.-%. Die Viskosität (bei einem Feststoffgehalt von 40 Gew.-%) liegt im Allgemeinen in einem Bereich von etwa 10 bis 4 000 mPas, gemessen mit einem Rotationsviskosimeter gemäß DIN 53019 bei 23 °C und einer Schergeschwindigkeit von 250 s⁻¹.

Bei Verwendung der erfindungsgemäßen Polymerdispersionen als Bindemittel für faserige und körnige Substrate, wie z. B. Holzschnitzel, Holzfasern, Textilfasern, Glasfasern, Mineralfasern oder Naturfasern wie Jute, Flachs, Hanf oder Sisal, aber auch Korkschnitzel oder Sand, werden nach Härtung Formteile mit einer hohen mechanischen Festigkeit erhalten, die auch im Feuchtklima ihre Dimensionsstabilität behalten. Bevorzugt ist die thermische Härtung. Die Härtungstemperaturen betragen im Allgemeinen 80 bis 250 °C, vorzugsweise 100 bis 200 °C.

Beim Erhitzen verdampft das in der Zusammensetzung enthaltene Wasser und es kommt zur Härtung der Zusammensetzung. Diese Prozesse können nacheinander oder gleichzeitig ablaufen. Unter Härtung wird in diesem Zusammenhang die chemische Veränderung der Zusammensetzung verstanden, z. B. die Vernetzung durch Knüpfung von kovalenten Bindungen zwischen den verschiedenen Bestandteilen der Zusammensetzungen, Bildungen von ionischen Wechselwirkungen und Clustern, Bildung von Wasserstoffbrücken. Weiterhin können bei der Härtung auch physikalische Veränderungen im Bindemittel ablaufen, wie z. B. Phasenumwandlungen oder Phaseninversionen. Ein Vorteil der erfindungsgemäßen Zusammensetzungen ist, dass ihre Härtung bei vergleichsweise niedrigen Temperaturen erfolgen kann. Die Dauer und die Temperatur der Erwärmung beeinflussen den Aushärtungsgrad.

Die Aushärtung kann auch in zwei oder mehr Stufen erfolgen. So kann z. B. in einem ersten Schritt die Härtungstemperatur und - zeit so gewählt werden, dass nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen möglich, die an anderer Stelle verformt und ausgehärtet werden können.

Ein weiterer Gegenstand der Erfindung ist ein gebundenes Substrat, erhältlich durch Behandeln eines Substrats mit einer wässrigen Polymerdispersion wie zuvor beschrieben und anschließende Härtung. Bevorzugt liegt das Substrat in Form eines Formkörpers vor.

Die Formkörper haben bevorzugt eine Dichte von 0,2 bis 1,4 g/cm³ bei 23 °C.

Als Formkörper kommen insbesondere Platten und konturierte Formteile in Betracht. Ihre Dicke beträgt im Allgemeinen mindestens 1 mm, vorzugsweise mindestens 2 mm, ihre Oberfläche beträgt typischerweise 200 bis 200 000 cm². In Betracht kommen insbesondere Holzfaser- und Spanplatten, Korkplatten, -blöcke und -formen, Dämmstoffplatten und -rollen, z. B. aus Mineral- und Glasfasern, Automobilinnenteile, z. B. Türinnenverkleidungen, Armaturenträger, Hutablagen, etc.

Die Gewichtsmenge des verwendeten Bindemittels beträgt im Allgemeinen 0,5 bis 40 Gew.-%, vorzugsweise 1 bis 30 Gew.-% (Bindemittel fest), bezogen auf das Substrat (Fasern, Schnitzel oder Späne).

Die Fasern, Schnitzel oder Späne können direkt mit dem Bindemittel beschichtet werden oder mit dem wässrigen Bindemittel vermischt werden. Die Viskosität des wässrigen Bindemittels wird vorzugsweise auf 10 bis 4 000 mPas, bevorzugt auf 30 bis 2 000 mPas (DIN 53019, Rotationsviskosimeter bei 250 sec⁻¹) eingestellt.

Die Mischung aus Fasern, Schnitzeln und Spänen und dem Bindemittel kann z. B. bei Temperaturen von 10 bis 150 °C vorgetrocknet werden und anschließend zu den Formkörpern, z. B. bei Temperaturen von 80 bis 250 °C, vorzugsweise 100 bis 200 °C, und Drücken von im Allgemeinen 2 bis 1 000 bar, vorzugsweise 10 bis 750 bar, besonders bevorzugt 200 bis 500 bar zu den Formkörpern verpresst werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z. B. Holzspänen und Holzfasern, hergestellt werden können. Die Wasserfestigkeit von Holzwerkstoffen kann erhöht werden, indem man dem Bindemittel eine handelsübliche wässrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in E.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das Gewichtsverhältnis Bindemittel fest:Holzspäne vorzugsweise 0,02:1 bis 0,3:1 beträgt. Eine gleichmäßige Verteilung lässt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250 °C, bevorzugt von 120 bis 225 °C durch Anwendung von Drücken von üblicherweise 10 bis 750 bar zu einer Platte verpresst. Die benötigten Presszeiten können in einem weiten Bereich variieren und liegen im Allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180 °C hergestellt werden.

Zur Beleimung werden die Holzfasern im Allgemeinen mit einem Luftstrom aufgewirbelt und das Bindemittel in den so erzeugten Fasernstrom eingedüst ("Blow-Line" Verfahren). Das Verhältnis Holzfasern zu Bindemittel, bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z. B. 130 bis 180 °C getrocknet, zu einem Faservlies ausgestreut und bei Drücken von 10 bis 50 bar zu Platten oder Formkörpern verpresst.

Die beleimten Holzfasern können auch, wie z. B. in der DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z. B. Türinnenverkleidungen von Kraftfahrzeugen weiterverarbeitet werden.

Auch andere Naturfaserstoffe, wie Sisal, Jute, Hanf, Flachs, Kokosfasern, Bananenfasern und andere Naturfasern können mit den Bindemitteln zu Platten und Formteile verarbeitet werden. Die Naturfaserstoffe können auch in Mischungen mit Kunststofffasern, z. B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den erfindungsgemäßen Bindemitteln imprägniert werden, gegebenenfalls unter Zusatz eines Benetzungshilfsmittels. Die imprägnierten Matten werden dann im bindemittelfeuchten oder vorgetrockneten Zustand z. B. bei Temperaturen zwischen 100 und 250 °C und Drücken zwischen 10 und 100 bar zu Platten oder Formteilen verpreßt.

Bevorzugt haben die mit den erfindungsgemäßen Bindemitteln imprägnierten Substrate beim Verpressen einen Restfeuchtegehalt von 3 bis 20 Gew.-%, bezogen auf das zu bindende Substrat.

Die erfindungsgemäß erhaltenen Formkörper haben eine geringe Wasseraufnahme, eine niedrige Dickenquellung nach Wasserlagerung, eine gute Festigkeit und sind formaldehydfrei.

Außerdem kann man die erfindungsgemäßen Zusammensetzungen als Bindemittel für Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Die Beschichtungs- und Imprägniermassen verleihen den Platten einen hohen Biegemodul. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2.000 mm.

Ferner können die erfindungsgemäßen Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die Komponenten der erfindungsgemäßen Zusammensetzung sind in der Beschichtungsmasse im Allgemeinen in einer Menge von 1 bis 65 Gew.-% enthalten. Der Anteil der inerten Füllstoffe liegt im Allgemeinen bei 0 bis 85 Gew.-%, der Wasseranteil beträgt mindestens 10 Gew.-%.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf den Trockengehalt der Zusammensetzung, betragen im Allgemeinen 2 bis 100 g/m².

Die einzusetzenden Mengen an Zusatzstoffen sind dem Fachmann bekannt und richten sich im Einzelfall nach den gewünschten Eigenschaften und dem Anwendungszweck.

Die erfindungsgemäßen Zusammensetzungen sind auch als Bindemittel für Dämmstoffe aus anorganischen Fasern, wie Mineralfasern und Glasfasern brauchbar. Solche Dämmstoffe werden technisch durch Verspinnen von Schmelzen der entsprechenden mineralischen Rohstoffe hergestellt, siehe US-A-2,550,465, US-A-2,604,427, US-A-2,830,648, EP-A-354 913 und EP-A-567 480. Die Zusammensetzung wird dann auf die frisch hergestellten, noch heißen anorganischen Fasern aufgesprüht. Das Wasser verdampft dann weitgehend und die Zusammensetzung bleibt im Wesentlichen unausgehärtet als Viskosemasse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200 °C zu einer steifen Matrix aus. Nach dem Härten werden die Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die erfindungsgemäßen Zusammensetzungen eignen sich außerdem als Bindemittel für Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z. B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Zusammensetzungen z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d. h. verfestigt.

Dazu wird das erfindungsgemäße Bindemittel vorzugsweise im Gewichtsverhältnis Faser/Bindemittel (fest) von 10:1 bis 1:1, besonders bevorzugt von 6:1 bis 3:1 auf das Rohfaservlies z. B. durch Beschichten, Imprägnieren, Tränken aufgebracht.

Das Bindemittel wird dabei vorzugsweise in Form einer verdünnten wässrigen Zubereitung mit 95 bis 40 Gew.-% Wasser verwendet.

Nach dem Aufbringen des Bindemittels auf das Rohfaservlies erfolgt im allgemeinen eine Trocknung vorzugsweise bei 100 bis 400, insbesondere 130 bis 280 °C, ganz besonders bevorzugt 130 bis 230 °C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z. B. aus PVC.

Bei der Verwendung als Dachbahnen werden die gebundenen Faservliese im Allgemeinen mit Bitumen beschichtet.

Aus den erfindungsgemäßen wässrigen Zusammensetzungen lassen sich weiterhin geschäumte Platten oder Formkörper herstellen. Dazu wird zunächst das in der Zusammensetzung enthaltene Wasser bei Temperaturen von < 100 °C bis zu einem Gehalt von < 20 Gew.-% entfernt. Die so erhaltene viskose Zusammensetzung wird dann bei Temperaturen > 100 °C, vorzugsweise bei 120 bis 300 °C, verschäumt. Als Treibmittel kann z. B. das in der Mischung noch enthaltene Restwasser und/oder die bei der Härtungsreaktion entstehenden gasförmigen Reaktionsprodukte dienen. Es können jedoch auch handelsübliche Treibmittel zugesetzt werden. Die entstehenden vernetzten Polymerschäume können beispielsweise zur Wärmedämmung und zur Schallisolierung eingesetzt werden.

Mit den erfindungsgemäßen Zusammensetzungen lassen sich durch Imprägnierung von Papier und anschließende schonende Trocknung nach den bekannten Verfahren sogenannte Laminate, z. B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, dass es zur Aushärtung des Bindemittels kommt.

Die erfindungsgemäßen Zusammensetzungen können weiterhin zur Herstellung von Schleifpapier und Schleifkörpern nach den üblicherweise mit Phenolharz als Bindemittel durchgeführten Herstellverfahren verwendet werden. Bei der Herstellung von Schleifpapieren wird auf ein geeignetes Trägerpapier zunächst eine Schicht der erfindungsgemäßen Bindemittel als Grundbinder aufgetragen (zweckmäßigerweise 10 g/m²). In den feuchten Grundbinder wird die gewünschte Menge an Schleifkorn, z. B. Siliciumcarbid, Korund, etc., eingestreut. Nach einer Zwischentrocknung wird eine Deckbinderschicht aufgetragen (z. B. 5 g/m²). Das auf diese Weise beschichtete Papier wird anschließend zur Aushärtung noch 5 Min. lang bei 170 °C getempert.

Über die Zusammensetzung des Polymerisates A1 kann die Härte und Flexibilität der Zusammensetzung auf das gewünschte Niveau eingestellt werden.

Die erfindungsgemäßen Zusammensetzungen sind weiterhin geeignet als formaldehydfreie Sandbindemittel zur Herstellung von Gussformen und Gusskernen für den Metallguss nach den üblichen thermischen Härtungsverfahren (E. Flemming, W. Tilch, Formstoffe und Formverfahren, Dt. Verlag für Grundstoffindustrie, Stuttgart, 1993).

Weiterhin eignen sie sich als Bindemittel für Kokillendämmplatten.

Die nachfolgenden, nicht einschränkenden Beispiele erläutern die Erfindung.

Die nichtflüchtigen Anteile wurden in einem Umluft-Trockenschrank aus dem Gewichtsverlust einer 1 g Probe bestimmt, die zwei Stunden lang bei 120 °C getrocknet wurde.

Die Viskosität der Zusammensetzungen wurde in einem Rheomat der Fa. Physica gemäß DIN 53019 bei einer Schergeschwindigkeit von 250 sec⁻¹ und einer Temperatur von 23 °C bestimmt.

Der K-Wert der Polymere A2 wurde nach Fikentscher (DIN 53276) bestimmt.

Der pH-Wert wurde mit einem handylab 1 pH-Meter der Fa. Schott bestimmt.

Die Verdünnbarkeit wurde durch sukzessive Verdünnung einer Dispersionsprobe mit vollentsalztem Wasser untersucht, wobei eine sichtbare Agglomerat-Bildung zu einer negativen Beurteilung führte.

Die Bestimmung der Teilchengröße der erfindungsgemäßen Polymerisate erfolgte nach der Methode der quasi-elastischen Lichtstreuung. Dazu wurden die erfindungsgemäßen Zusammensetzungen mit einer 2 %igen Natriumlaurylsulfat-Lösung auf einen Feststoffgehalt von 0,01 Gew.-% verdünnt und mittels eines Autosizers 2C der Fa. Malvern vermessen.

Beispiel 1a (Herstellung des carboxylgruppenhaltigen Polymerisats A2)

In einem Druckreaktor mit Ankerrührer werden 0,55 kg vollentsalztes Wasser, 0,36 kg Maleinsäureanhydrid sowie 0,91 kg einer 40 gew.-%igen wässrigen Lösung eines ethoxylierten Oleylamins (mittlerer Ethoxylierungsgrad = 12, Lutensol®FA der Fa. BASF AG) vorgelegt. Unter Stickstoffatmosphäre wird auf 125 °C erwärmt. Nach Erreichen dieser Temperatur wird innerhalb von 4 h Zulauf 1, bestehend aus 0,75 kg vollentsalztem Wasser und 1,00 kg Acrylsäure sowie innerhalb von 5 h Zulauf 2, bestehend aus 0,22 kg vollentsalztem Wasser und 0,12 kg H₂O₂ (30 gew.-%ig) gleichmäßig zudosiert. Nach Ende von Zulauf 1 werden weitere 0,11 kg vollentsalztes Wasser zugegeben. Nach Ende der Reaktion wird auf Raumtemperatur abgekühlt. Die so erhaltene wässrige Polymerisat-Lösung hat einen Feststoffgehalt von 43,0 %, einen pH-Wert von 1,7 und eine Viskosität von 450 mPas. Der K-Wert beträgt 13,3.

Beispiel 1b (Herstellung einer erfindungsgemäßen Polymerdispersion)

In einem 4 l-Glasgefäß mit Ankerrührer (120 UpM) werden 807 g Wasser, 1 279 g einer wässrigen Lösung des Säurepolymerisats A2 (43,0 gew.-%ig) aus Beispiel 1a, 5 Gew.-% des Zulaufs 1 und 10 Gew.-% des Zulaufs 2 vorgelegt und auf 90 °C erhitzt. Nach 2 min werden bei dieser Temperatur der Rest von Zulauf 1 innerhalb von 3 h und die Restmenge von Zulauf 2 innerhalb von 3,5 h räumlich getrennt zudosiert. Anschließend wird noch 30 min bei dieser Temperatur nachpolymerisiert und das Reaktionsgemisch abgekühlt. Die so hergestellte Polymerdispersion enthält 38,9 Gew.-% nichtflüchtige Anteile und hat einen pH-Wert von 2,0. Die Viskosität der erhaltenen Polymerdispersion beträgt 215 mPas (bei 250 s⁻¹).

### Zulauf 1:

| | |
|---|---|
| 325 g | Styrol |
| 293 g | Methylmethacrylat |
| 33 g | Methacrylsäure |

### Zulauf 2:

| | |
|---|---|
| 150 g | vollentsalztes Wasser |
| 6,5 g | Natriumperoxodisulfat |

### Beispiel 2 (Herstellung einer erfindungsgemäßen Polymerdispersion)

Die Darstellung erfolgte analog zu Beispiel 1b unter Verwendung der unten aufgeführten Einsatzstoffe. Die so hergestellte Polymerdispersion enthält 44,5 Gew.-% nichtflüchtige Anteile und hat einen pH-Wert von 1,9. Die Viskosität der erhaltenen Polymerdispersion beträgt 767 mPas.

### Vorlage:

| | |
|---|---|
| 478 g | vollentsalztes Wasser |
| 1 279 g | eines Säurepolymerisats A2 (43 gew.-%ig), gemäß Beispiel 1a |

### Zulauf 1:

| | |
|---|---|
| 325 g | Styrol |
| 293 g | Methylmethacrylat |
| 33 g | Acetoacetoxyethylmethacrylat |

### Zulauf 2:

| | |
|---|---|
| 150 g | vollentsalztes Wasser |
| 6,5 g | Natriumperoxodisulfat |

### Beispiel 3 (Herstellung einer erfindungsgemäßen Polymerdispersion)

In einem 4 l-Glasgefäß mit Ankerrührer (120 Upm) werden 372 g Wasser und 10 Gew.-% des Zulaufs 2 vorgelegt und auf 85 °C erhitzt. Nach 2 min werden bei dieser Temperatur der Zulauf 1 innerhalb von 3 h und die Restmenge von Zulauf 2 innerhalb von 3,5 h räumlich getrennt zudosiert. Anschließend wird noch 30 min bei dieser Temperatur nachpolymerisiert und das Reaktionsgemisch abgekühlt. Die so hergestellte Polymerdispersion enthält 50,3 Gew.-% nichtflüchtige Anteile und hat einen pH-Wert von 2,1. Die Viskosität der erhaltenen Polymerdispersion beträgt 982 mPas (250 s⁻¹). Anschließend werden 314 g einer wässrigen Lösung (50 Gew.-%) von 2,2',2"-Nitrilo-triethanol zugegeben. Der pH-Wert der Mischung beträgt 3,0.

### Zulauf 1:

| | |
|---|---|
| 1 308 g | des Säurepolymers aus Beispiel 1a (43 gew.-%ig) |
| 525 g | Styrol |
| 188 g | Methylmethacrylat |
| 38 g | 2-Hydroxyethylacrylat |

### Zulauf 2:

| | |
|---|---|
| 1 003 g | vollentsalztes Wasser |
| 7,5 g | Natriumperoxodisulfat |

### Beispiel 4 (Herstellung einer erfindungsgemäßen Polymerdispersion)

In einem 1 l-Glasgefäß werden 500 g der in Beispiel 3 hergestellten Dispersion mit 45 g Adipinsäurebis(diethanolamid) (Primid® XL 552, Fa. EMS Chemie) versetzt und innig gerührt. Der pH-Wert der Mischung beträgt 1,8.

### Beispiel 5 (Herstellung einer erfindungsgemäßen Polymerdispersion)

In einem 4 l-Glasgefäß mit Ankerrührer (120 Upm) werden 747 g Wasser, 1 231 g einer wässrigen Lösung des Säurepolymerisats A2 (46,0 gew.-%ig) aus Beispiel 1a, 5 Gew.-% des Zulaufs 1 und 10 Gew.-% des Zulaufs 2 vorgelegt und auf 85 °C erhitzt. Nach 2 min werden bei dieser Temperatur die Restmenge von Zulauf 1 innerhalb von 3 h und die Restmenge von Zulauf 2 innerhalb von 3,5 h räumlich getrennt zudosiert. Anschließend wird noch 30 min bei dieser Temperatur nachpolymerisiert und das Reaktionsgemisch abgekühlt. Die so erhaltene Polymerdispersion enthält 40,1 Gew.-% nichtflüchtige Anteile und hat einen pH-Wert von 1,9. Die Viskosität der erhaltenen Polymerdispersion beträgt 1 170 mPas (bei 250 s⁻¹). Anschließend werden 140 g einer wässrigen Lösung (50 Gew.-%) von 2,2',2"-Nitrilo-triethanol und 20 g hypophosphoriger Säure zugegeben. Der pH-Wert der Mischung beträgt 2,8, der LD-Wert 42.

### Zulauf 1:

| | |
|---|---|
| 150 g | Styrol |
| 563 g | 2-Ethylhexylacrylat |
| 38 g | 2-Hydroxyethylacrylat |

### Zulauf 2:

| | |
|---|---|
| 90 g | vollentsalztes Wasser |
| 8 g | Natriumperoxodisulfat |

### Beispiel 6a (Herstellung des carboxylgruppenhaltigen Polymerisats A2)

In einem Druckreaktor mit Ankerrührer werden 0,55 kg vollentsalztes Wasser, 0,27 kg Maleinsäureanhydrid sowie 0,15 kg einer 40 gew.-%igen wässrigen Lösung eines ethoxylierten Oleylamins (mittlerer Ethoxylierungsgrad = 12, Lutensol®FA der Fa. BASF AG) vorgelegt. Unter Stickstoffatmosphäre wird auf 125 °C erwärmt.

Nach Erreichen dieser Temperatur wird innerhalb von 4 h der Zulauf 1, bestehend aus 0,75 kg vollentsalztem Wasser und 1,09 kg Acrylsäure sowie innerhalb von 5 h Zulauf 2, bestehend aus 0,22 kg vollentsalztem Wasser und 0,12 kg H₂O₂ (30 gew.-%ig) gleichmäßig zudosiert. Nach Ende der Zugabe von Zulauf 1 werden weitere 0,11 kg vollentsalztes Wasser zugegeben. Nach Beendigung der Reaktion wird auf Raumtemperatur abgekühlt. Die so erhaltene wässrige Polymerisat-Lösung hat einen Feststoffgehalt von 44,6 %, einen pH-Wert von 1,2 und eine Viskosität von 342 mPas. Der K-Wert beträgt 16,1.

Beispiel 6b (Herstellung einer erfindungsgemäßen Polymerdispersion)

In einem 4 l-Glasgefäß mit Ankerrührer (120 Upm) werden 208 g Wasser und 10 Gew.-% des Zulaufs 2 vorgelegt und auf 85 °C erhitzt. Nach 2 min werden bei dieser Temperatur der Zulauf 1 innerhalb von 3 h und die Restmenge von Zulauf 2 innerhalb von 3,5 h räumlich getrennt zudosiert. Anschließend wird noch 30 min bei dieser Temperatur nachpolymerisiert und das Reaktionsgemisch abgekühlt. Die so hergestellte Polymerdispersion enthält 40,0 Gew.-% nichtflüchtige Anteile und hat einen pH-Wert von 2,0. Die Viskosität der erhaltenen Polymerdispersion beträgt 48 mPas, die Teilchengröße 297 nm.

### Zulauf 1:

| | |
|---|---|
| 1 682 g | des Säurepolymers A2 aus Beispiel 6a |
| 325 g | Methylmethacrylat |
| 150 g | n-Butylacrylat |
| 25 g | Glycidylmethacrylat |

### Zulauf 2:

| | |
|---|---|
| 50 g | vollentsalztes Wasser |
| 5 g | Natriumperoxodisulfat |

### Beispiel 7a (Herstellung des carboxylgruppenhaltigen Polymerisats A2)

In einem Druckreaktor mit Ankerrührer werden 0,66 kg vollentsalztes Wasser, 0,82 kg Maleinsäureanhydrid sowie 0,45 kg einer 40 gew.-%igen wässrigen Lösung eines ethoxylierten Oleylamins (mittlerer Ethoxylierungsgrad = 12, Lutensol®FA der BASF AG) vorgelegt. Unter Stickstoffatmosphäre wird auf 125 °C erwärmt. Nach Erreichen dieser Temperatur wird innerhalb von 4 h Zulauf 1, bestehend aus 0,90 kg vollentsalztem Wasser und 0,82 kg Acrylsäure sowie innerhalb von 5 h Zulauf 2, bestehend aus 0,26 kg vollentsalztem Wasser und 0,14 kg H₂O₂ (30 gew.-%ig) gleichmäßig zudosiert. Nach Ende der Zugabe von Zulauf 1 werden weitere 0,13 kg vollentsalztes Wasser zugegeben. Nach Beendigung der Reaktion wird auf Raumtemperatur abgekühlt. Die so erhaltene wässrige Polymerisat-Lösung hat einen Feststoffgehalt von 43,2 %, einen pH-Wert von 1,8 und eine Viskosität von 72 mPas. Der K-Wert beträgt 9,0.

### Beispiel 7b (Herstellung einer erfindungsgemäßen Polymerdispersion)

Die Darstellung erfolgte analog zu Beispiel 3 unter Verwendung der unten aufgeführten Einsatzstoffe. Die so hergestellte Polymerdispersion enthält 52,1 Gew.-% nichtflüchtige Anteile und hat einen pH-Wert von 2,1. Die Viskosität der erhaltenen Polymerdispersion beträgt 916 mPas. Anschließend werden 145 g einer wässrigen Lösung (50 Gew.-%) von ethoxyliertem Diethylentriamin (jedes NH-Wasserstoffatom ist im Mittel einfach ethoxyliert) zugegeben.

### Vorlage:

| | |
|---|---|
| 551 g | vollentsalztes Wasser |
| 10,85 | Zulauf 2 |

### Zulauf 1:

| | |
|---|---|
| 953 g | des Säurepolymers A2 aus Beispiel 7a |
| 595 g | Styrol |
| 213 g | Methylmethacrylat |
| 43 g | 2-Hydroxyethylacrylat |

### Zulauf 2:

| | |
|---|---|
| 100 g | vollentsalztes Wasser |
| 8,5 g | Natriumperoxodisulfat |

### Vergleichsbeispiel V1:

In einem 4 l-Glasgefäß mit Ankerrührer (120 Upm) werden 516 g Wasser, 1 020 g einer 50,0 gew.-%igen wässrigen Lösung eines Säurepolymerisats, aufgebaut aus 50 Gewichtsteilen Acrylsäureeinheiten und 50 Gewichtsteilen Maleinsäureeinheiten (pH-Wert 0,8, K-Wert 12), 319 g einer 40 gew.-%igen wässrigen Lösung eines ethoxylierten Oleylamins (mittlerer Ethoxylierungsgrad = 12, Lutensol®FA der Fa. BASF AG), 5 Gew.-% des Zulaufs 1 und 10 Gew.-% des Zulaufs 2 vorgelegt und auf 85 °C erhitzt. Nach 2 min werden bei dieser Temperatur die Restmenge von Zulauf 1 innerhalb von 3 h und die Restmenge von Zulauf 2 innerhalb von 3,5 h räumlich getrennt zudosiert. Anschließend wird noch 30 min bei dieser Temperatur nachpolymerisiert und das Reaktionsgemisch abgekühlt. Die so erhaltene Polymerdispersion enthält 49,0 Gew.-% nichtflüchtige Anteile und hat einen pH-Wert von 1,9. Die Viskosität der erhaltenen Polymerdispersion beträgt 97 mPas (bei 250 s⁻¹).

### Zulauf 1:

| | |
|---|---|
| 637 g | Styrol |
| 170 g | Methylmethacrylat |
| 43 g | 2-Hydroxyethylacrylat |

### Zulauf 2:

| | |
|---|---|
| 150 g | vollentsalztes Wasser |
| 8,5 g | Natriumperoxodisulfat |

In einem 1 l-Glasgefäß werden 445 g der in Beispiel V1 hergestellten Dispersion mit 53,4 g einer wässrigen Lösung von 2,2',2"-Nitrilo-triethanol (50 Gew.-%) versetzt und innig gerührt. Der pH-Wert der Mischung beträgt 3,2.

### Vergleichsbeispiel V2:

In einem 4 l Glasgefäß mit Ankerrührer wurden 590 g Wasser, 4,7 g einer 15 %igen wässrigen Natriumlaurylsulfatlösung, 35 g Styrol, 35 g Ethylacrylat und 2,1 g Acrylsäure vorgelegt und auf 85 °C aufgeheizt. Nach Erreichen dieser Temperatur wurde zeitgleich mit der Zugabe der Zuläufe 1 und 2 begonnen. Zulauf 1 bestand aus einer gerührten Emulsion von 550 g Wasser, 88,6 g 15 %iger Natriumlaurylsulfat-Lösung, 665 g Styrol, 665 g Ethylacrylat und 40 g Acrylsäure und wurde innerhalb von 3 h zudosiert. Zulauf 2 war eine Lösung von 8,4 g Natriumperoxodisulfat in 200 g Wasser und wurde innerhalb von 3,5 h zudosiert. Anschließend wurde auf 70 °C abgekühlt und innerhalb von 1 h 14 g einer 10 %igen wässrigen Lösung von t-Butylhydroperoxid sowie 6,3 g einer 20 %igen wässrigen Hydroxymethansulfonsäure-Natriumsalzlösung zugegeben. FG: 50,3 %, LD-Wert: 73, pH: 1,7.

200 g der so hergestellten wässrigen Dispersion wurden innerhalb von 15 min unter Rühren zu einer Mischung aus 470 g einer 50,0 gew.-%igen wässrigen Lösung eines Säurepolymerisats (aufgebaut aus 50 Gewichtsteilen Acrylsäureeinheiten und 50 Gewichtsteilen Maleinsäureeinheiten, pH-Wert 0,8, K-Wert 12), 319 g einer 40 gew.-%igen wässrigen Lösung eines ethoxylierten Oleylamins (mittlerer Ethoxylierungsgrad = 12, Lutensol®FA der Fa. BASF AG) und 70 g 2,2',2"-Nitrilo-triethanol gegeben. Der Feststoffgehalt dieser Mischung betrug 53 %, der pH-wert 3,1 und die Viskosität 190 mPas.

| Verdünnbarkeit der Beispieldispersionen: | |
|---|---|
| Beispiel | Verdünnbarkeit |
| 1b | + |
| 2 | + |
| 3 | + |
| 4 | + |
| 5 | + |
| 6b | + |
| 7b | + |
| V1 | - |
| V2 | + |

### A) Prüfung als Bindemittel für Naturfasermatten

Eine Fasermatte aus einem 1:1-Gemisch von Jute- und Sisalfasern (mittleres Flächengewicht 1 200 g/m², Restfeuchtegehalt 7 %, Hersteller Braunschweiger Jute- und Flachs Industriebetriebs-GmbH) wird mittels einer Foulard-Walze (Hersteller Werner Mathis AC, Niederhasli/CH, Typ Mathis 2-Walzen Laborfoulard, Typ VFM) mit den genannten Bindemitteln imprägniert. Diese werden dazu auf einen Feststoffgehalt von 25 % verdünnt. Bezogen auf das trockene Fasergewicht werden 30 Gew.-% nichtflüchtige Bindemittelanteile aufgebracht.

Die imprägnierten Fasermatten (35 x 30 cm) werden in einem Umlufttrockenschrank bei 80 °C auf einen Restfeuchtegehalt von 10 % bezogen auf trockene Fasern getrocknet und mit einer hydraulischen Presse (Hersteller Fa. Wickert Maschinenbau GmbH, Landau, Modell WKP 600/3,5/3) bei einer Presstemperatur von 200 °C für 60 sec zwischen 2 Metallplatten mit 2 mm Abstandshaltern verpresst. Dabei wird zunächst 30 sec ein Pressdruck von 50 bar eingestellt, nach einer 3 sec anhaltenden Druckentlastung wird anschließend noch 27 sec lang ein Druck von 100 bar ausgeübt.

Die erhaltenen Faserplatten werden 24 h im Normklima bei 23 °C/65 % relativer Feuchte gelagert und anschließend geprüft. Der Biegemodul wird mittels Dreipunkt-Biegeversuch nach DIN 52352 bei verschiedenen Prüftemperaturen (23, 60 und 120 °C) gemessen. Die Dickenquellung (DQ) wird als relative Zunahme der Dicke von 3 x 30 cm großen Streifen der verpressten Fasermatten nach 7 d Lagerung in einem Klimaschrank (Fa. Weiss Umwelttechnik GmbH, Reiskirchen/D, Modell SB22/300/40) bei 80 °C und 90 % relativer Feuchte bestimmt.

| Jute-Sisal Faserplatten 30 Gew.-% Bindemittel | | | | | | |
|---|---|---|---|---|---|---|
| Bindemittel | Bsp. Nr. | 1b | 2 | 3 | 4 | V1 |
| Dicke | mm | 2,04 | 2,19 | 1,9 | 1,95 | 1,98 |
| Dichte | g/cm³ | 0,72 | 0,7 | 0,78 | 0,75 | 0,71 |
| Dickenquellung | % | 15 | 16 | 12 | 13 | 24 |

| Jute-Sisal Faserplatten 30 Gew.-% Bindemittel | | | | |
|---|---|---|---|---|
| Bindemittel | Bsp. Nr. | 3 | 4 | V1 |
| | | | | |
| Biegemodul 23 °C | N/mm² | 4 000 | 4 300 | 3 500 |
| Biegemodul 60 °C | N/mm² | 3 900 | 3 700 | 2 900 |
| Biegemodul 120 °C | N/mm² | 1 700 | 1 600 | 1 200 |

### B) Prüfung als Bindemittel für Holzfasern

In einem Refiner werden Fichtholzhackschnitzel thermomechanisch aufgeschlossen (siehe: "Gewinnung und Eigenschaften von Holzfasern", Holzzentralblatt Nr. 36 vom 24.03.1999, S. 516-517), in einer Blow-Line mit dem genannten Bindemittel beleimt (Bindemittelflottenkonzentration 35 %, Auftragsmenge 15 Gew.-%, fest bezogen auf die trockenen Holzfasern) und in einem Faserstoffstromtrockner mit heißer Luft getrocknet (Eingangstemperatur 120 °C, Ausgangstemperatur 80 °C).

200 g der beleimten Fasern (Restfeuchte ca. 12 % bezogen auf trockene Fasern, mittlere Faserlänge ca. 3 mm) werden zu 30 x 30 cm großen Fasermatten ausgestreut. Diese Fasermatten werden mit einer hydraulischen Presse (Fa. Wickert Maschinenbau GmbH, Landau, Modell WKP 600/3,5/3) bei einer Presstemperatur von 200 °C für 105 sec zwischen 2 Metallplatten mit 2 mm Abstandshaltern verpresst. Dabei wird zunächst 45 sec ein Pressendruck von 50 bar eingestellt, nach einer 5 sec anhaltenden Druckentlastung wird noch 55 sec lang ein Druck von 200 bar ausgeübt.

Die erhaltenen Faserplatten werden 24 h im Normklima bei 23 °C/65 % relative Feuchte gelagert und anschließend geprüft. Der Biegemodul bei 23 °C wird mittels Dreipunkt-Biegeversuch nach DIN 52352 gemessen. Die Dickenquellung der Holzfaserplatten wird als relative Zunahme der Dicke von 2 x 2 cm großen Probenkörper nach 24 h Lagerung in entmineralisiertem Wasser analog zur DIN 52351 bestimmt.

| Holzfaserplatten, 15 Gew.-% Bindemittel | | | |
|---|---|---|---|
| Bindemittel | Bsp. Nr. | 3 | V2 |
| Plattendicke | mm | 2,1 | 2 |
| Dichte | g/cm³ | 0,92 | 0,97 |
| Biegemodul | N/mm² | 3 300 | 3 300 |
| Dickenquellung | % | 21 | 34 |

### C) Prüfung als Bindemittel für Korkgranulat:

In einem Kenwood-Labormischer werden 80 g getrocknetes Korkgranulat (gereinigter und gemahlener Kork, Schüttdichte 60 g/l, mittlere Partikelgröße 1,5 mm) und 35 g des 40 %igen Bindemittels aus Beispiel 5 für 2 min vermischt. Die mit Bindemittel beaufschlagten Korkpartikel werden ohne weitere Trocknung in eine zweiteilige Metallform (Innenabmessung 15 x 15 cm) gefüllt und vorverdichtet. Boden und Stempel der Form sind zum Abführen des freigesetzten Wasserdampfs mit Entlüftungslöchern perforiert. Die Metallform wird in einer auf 115 °C vorgeheizten Wickert-Presse (s. A) für 2 h bei einem Pressdruck von 100 bar gehalten.

Es wird ein Korkblock mit einer Dichte von 0,20 g/cm³ erhalten. Die Dickenquellung von 5 x 5 x 3 cm großen Probenkörpern aus diesem Block nach 24 h Lagerung in entmineralisiertem Wasser bei 23 °C beträgt 2,2 %. Nach dreistündigem Kochen in entmineralisiertem Wasser beträgt die Dickenquellung 1 %. Ein wie zuvor beschrieben erhaltener Korkblock wird mit einer Bandsäge in 5 mm dicke Probenplatten zerschnitten. Die Zugfestigkeit dieser flexiblen Korkplatten gemessen nach ISO 7322 beträgt 0,6 MPa.

In einem Kenwood-Labormischer werden 130 g getrocknetes Korkgranulat (gereinigter und gemahlener Kork, Schüttdichte 90 g/l, mittlere Partikelgröße ca. 8 mm) und 21 g je 50 %iger Bindemittel aus den unten aufgeführten Beispielen für 2 min vermischt. Die mit Bindemittel beaufschlagten Korkpartikel werden ohne weitere Trocknung in der oben beschriebenen Metallform bei einer Presstemperatur von 130 °C für 2 h bei einem Pressdruck von 100 bar verpresst.

Aus diesen starren Korkblöcken werden 5 x 5 x 3 cm große Probenkörper geschnitten, deren Dickenquellung unter den oben angegebenen Prüfbedingungen getestet wird.

| Bindemittel | Bsp. Nr. | 2 | 3 | 6b | 7b |
|---|---|---|---|---|---|
| Dickenquellung (24 h H₂O, 23°C) | % | 1 | 1 | 3 | 1 |
| Dickenquellung (3 h Kochen in H₂O) | % | 12 | 18 | 17 | 15 |

### D) Prüfung als Bindemittel für feinteilige mineralische Materialien

300 g Quarzsand H34 wurden mit den Bindemittel-Zusammensetzungen bei Raumtemperatur vermischt (5 Gew.-% trockenes Bindemittel, bezogen auf Sand). Aus den feuchten Mischungen werden in einer entsprechenden Metallform Prüfkörper (Fischer-Riegel) mit den Abmessungen 17 x 2,3 x 2,3 cm geformt, verdichtet und nach dem Entformen 2 h bei 125 °C im Umluftofen ausgehärtet. Zum Verdichten wird eine Ramme von Typ PRA der Georg Fischer AG eingesetzt.

Die Biegefestigkeit der so hergestellten Fischer-Riegel wird im trockenen Zustand bei 23 °C und 100 °C Prüfkörpertemperatur in einem Festigkeitsprüfapparat Typ PFG mit der Prüfvorrichtung PBV (Fa. Georg Fischer, Schaffhausen/CH) bestimmt. Weiterhin wird auch die Biegefestigkeit der Fischer-Riegel nach einer Stunde Lagerung in entmineralisiertem Wasser bei 23 °C, in nassem Zustand bestimmt.

| Sandprüfkörper, 5 Gew.-% Bindemittel fest | | | | |
|---|---|---|---|---|
| Bindemittel | Bsp. Nr. | 3 | 4 | V1 |
| Biegefestigkeit, trocken 23 °C | N/cm² | 1 250 | 1 270 | 1 230 |
| Biegefestigkeit, trocken 100 °C | N/cm² | 1 120 | 1 130 | 950 |
| Biegefestigkeit, nass, 23 °C | N/cm² | 950 | 1 080 | 470 |

### E) Prüfung als Beschichtung

Das Bindemittel aus Beispiel 5 wird mit einem Rakel auf eine Glasplatte aufgetragen, die Schichtdicke des nassen Films betrugt 200 µm. Der Film wurde 24 h bei Raumtemperatur getrocknet. Anschließend wurden die Proben im Trockenschrank bei angegebenen Temperaturen und Zeiten ausgehärtet.

Die Pendelhärte wurde nach König (DIN 53157) mit einem Pendelhärtegerät Labotron 5852 der Fa. Byk Mallinckrodt GmbH bestimmt.

| Vernetzungszeit bei 150 °C in min | Pendelhärte in sec |
|---|---|
| 0 | 10 |
| 2 | 23 |
| 5 | 76 |
| 10 | 126 |
| 15 | 132 |

## Patentansprüche

1. Wässrige Polymerdispersion, enthaltend dispergierte Polymerteilchen mindestens eines Polymerisats A1, das erhältlich ist durch radikalische Emulsionspolymerisation in Gegenwart eines Polymerisats A2, das aufgebaut ist aus
- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers.

2. Wässrige Polymerdispersion nach Anspruch 1, wobei das Polymerisat A2 als ethylenisch ungesättigte Mono- und/oder Dicarbonsäure mindestens eine Verbindung enthält, die ausgewählt ist unter C₃-C₁₀-Monocarbonsäuren und C₄-C₈-Dicarbonsäuren, vorzugsweise Acrylsäure, Methacrylsäure, Crotonsäure, Fumarsäure, Maleinsäure, 2-Methylmaleinsäure und Itaconsäure.

3. Wässrige Polymerdispersion nach einem der vorhergehenden Ansprüche, wobei das mindestens eine Hydroxylgruppe aufweisende Amin ausgewählt ist unter Aminen der allgemeinen Formel
R^{c}NR^{a}R^{b}
wobei
R^{c} für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder 3 nicht benachbarte Doppelbindungen aufweisen kann,
R^{a} für Hydroxy-C₁-C₆-alkyl oder einen Rest der Formel II
-(CH₂CH₂O)ₓ(CH₂CH(CH₃)O)_{y}-H (II)
steht, wobei
in der Formel II die Reihenfolge der Alkylenoxideinheiten beliebig ist und x und y unabhängig voneinander für eine ganze Zahl von 0 bis 100 stehen, wobei die Summe aus x und y > 1 ist,
R^{b} für Wasserstoff, C₁- bis C₂₂-Alkyl, Hydroxy-C₁-C₆-alkyl, C₆- bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann,
oder R^{b} für einen Rest der Formel III
-(CH₂CH₂O)ᵥ(CH₂CH(CH₃)O)_{w}-H (III)
steht, wobei
in der Formel III die Reihenfolge der Alkylenoxideinheiten beliebig ist und v und w unabhängig voneinander für eine ganze Zahl von 0 bis 100 stehen,
und Mischungen davon.

4. Wässrige Polymerdispersion nach einem der vorhergehenden Ansprüche, wobei das Gewichtsverhältnis auf Feststoffbasis von Polymerisat A1 zu Polymerisat A2 im Bereich von 7:1 bis 1:7, vorzugsweise 3:1 bis 1:3, liegt.

5. Wässrige Polymerdispersion nach einem der vorhergehenden Ansprüche, die außerdem bis zu 50 Gew.-%, bezogen auf das Polymerisat A2, mindestens eines Amins der Formel
R^{c}NR^{a}R^{b},
wie in Anspruch 3 definiert, enthält.

6. Wässrige Polymerdispersion nach einem der vorhergehenden Ansprüche, die außerdem mindestens einen Amin- oder Amid-Vernetzer mit mindestens zwei Hydroxygruppen enthält.

7. Wässrige Polymerdispersion nach einem der vorhergehenden Ansprüche, die außerdem mindestens einen Reaktionsbeschleuniger enthält.

8. Wässrige Polymerdispersion nach Anspruch 7, wobei der Reaktionsbeschleuniger ausgewählt ist unter phosphorhaltigen Verbindungen, bevorzugt hypophosphorige Säure und deren Alkaliund Erdalkalisalzen.

9. Wässrige Polymerdispersion nach einem der vorhergehenden Ansprüche, wobei das Polymerisat A1 aufgebaut ist aus
- 80 bis 100 Gew.-%, bezogen auf das Gesamtgewicht der Monomeren für das Polymerisat, mindestens eines ethylenisch ungesättigten Hauptmonomeren und
- bis zu 20 Gew.-%, bezogen auf das Gesamtgewicht der Monomeren für das Polymerisat, mindestens eines ethylenisch ungesättigten Comonomeren.

10. Wässrige Polymerdispersion nach einem der vorhergehenden Ansprüche, enthaltend
- 70 bis 50 Gew.-% Polymerisat A1,
- 30 bis 50 Gew.-% Polymerisat A2,
- 0 bis 10 Gew.-% oberflächenaktives alkoxyliertes Alkylamin,
- 0 bis 20 Gew.-% hydroxylgruppenhaltiger Vernetzer, und
- 0 bis 5 Gew.-% Reaktionsbeschleuniger.

11. Verfahren zur Herstellung einer wässrigen Polymerdispersion nach einem der Ansprüche 1 bis 10 durch radikalische Emulsionspolymerisation wenigstens eines ethylenisch ungesättigten Monomeren zu einem Polymerisat A1, wobei die Polymerisation in Gegenwart wenigstens eines Polymerisats A2 erfolgt.

12. Gebundenes Substrat, erhältlich durch Behandeln eines Substrats mit einer wässrigen Polymerdispersion nach einem der Ansprüche 1 bis 10 und anschließende Härtung.

13. Substrat nach Anspruch 12 in Form eines Formkörpers.

14. Verwendung einer wässrigen Polymerdispersion nach einem der Ansprüche 1 bis 10 als Bindemittel für Substrate, bevorzugt Formkörper, besonders bevorzugt für Formkörper aus faserigen oder körnigen Materialien, die insbesondere ausgewählt sind unter Holzschnitzeln, Holzfasern, Textilfasern, Glasfasern, Mineralfasern, Naturfasern, Korkschnitzeln und Sand.

## Claims

1. An aqueous polymer dispersion comprising dispersed polymer particles of at least one addition polymer A1 obtainable by free-radical emulsion polymerization in the presence of an addition polymer A2 synthesized from
- from 50 to 99.5% by weight of at least one ethylenically unsaturated mono- and/or dicarboxylic acid,
- from 0.5 to 50% by weight of at least one ethylenically unsaturated compound selected from esters of ethylenically unsaturated monocarboxylic acids and monoesters and diesters of ethylenically unsaturated dicarboxylic acids with an amine having at least one hydroxyl group,
- up to 20% by weight of at least one further monomer.

2. A dispersion as claimed in claim 1, wherein the polymer A2 comprises as ethylenically unsaturated mono- and/or dicarboxylic acid at least one compound selected from C₃-C₁₀ monocarboxylic acids and C₄-C₈ dicarboxylic acids, preferably acrylic acid, methacrylic acid, crotonic acid, fumaric acid, maleic acid, 2-methylmaleic acid, and itaconic acid.

3. A dispersion as claimed in either of the preceding claims, wherein said amine having at least one hydroxyl group is selected from amines of the formula
R^{c}NR^{a}R^{b}
where
R^{c} is C₆ to C₂₂ alkyl, C₆ to C₂₂ alkenyl, aryl-C₆-C₂₂ alkyl or aryl-C₆-C₂₂ alkenyl, it being possible for the alkenyl radical to have 1, 2 or 3 nonadjacent double bonds,
R^{a} is hydroxy-C₁-C₆ alkyl or a radical of the formula II
-(CH₂CH₂O)ₓ(CH₂CH(CH₃)O)_{y}-H (II)
where
in the formula II the sequence of the alkylene oxide units is arbitrary and x and y independently of one another are integers from 0 to 100, the sum of x and y being > 1,
R^{b} is hydrogen, C₁ to C₂₂ alkyl, hydroxy-C₁-C₆ alkyl, C₆ to C₂₂ alkenyl, aryl-C₆-C₂₂ alkyl, aryl-C₆-C₂₂ alkenyl or C₅ to C₈ cycloalkyl, it being possible for the alkenyl radical to have 1, 2 or 3 nonadjacent double bonds, or R^{b} is a radical of the formula III
-(CH₂CH₂O)ᵥ(CH₂CH(CH₃)O)_{w}-H (III)
where
in the formula III the sequence of the alkylene oxide units is arbitrary and v and w independently of one another are integers from 0 to 100,
and mixtures thereof.

4. A dispersion as claimed in any of the preceding claims, wherein the weight ratio based on solids of polymer A1 to polymer A2 is in the range from 7:1 to 1:7, preferably from 3:1 to 1:3.

5. A dispersion as claimed in any of the preceding claims, further comprising up to 50% by weight, based on the polymer A2, of at least one amine of the formula
R^{c}NR^{a}R^{b},
as defined in claim 3.

6. A dispersion as claimed in any of the preceding claims, further comprising at least one amine or amide crosslinker having at least two hydroxyl groups.

7. A dispersion as claimed in any of the preceding claims, further comprising at least one reaction accelerant.

8. A dispersion as claimed in claim 7, wherein said reaction accelerant is selected from phosphorus compounds, preferably hypophosphorous acid and its alkali metal and alkaline earth metal salts.

9. A dispersion as claimed in any of the preceding claims, wherein the polymer A1 is sysnthesized from
- from 80 to 100% by weight, based on the overall weight of the monomers for the polymer, of at least one ethylenically unsaturated principal monomer, and
- up to 20% by weight, based on the overall weight of the monomers for the polymer, of at least one ethylenically unsaturated comonomer.

10. A dispersion as claimed in any of the preceding claims, comprising
- from 70 to 50% by weight of polymer A1,
- from 30 to 50% by weight of polymer A2,
- from 0 to 10% by weight of surface-active alkoxylated alkylamine,
- from 0 to 20% by weight of hydroxyl-containing crosslinkers, and
- from 0 to 5% by weight of reaction accelerants.

11. A process for preparing an aqueous polymer dispersion as claimed in any of claims 1 to 10 by free-radical emulsion polymerization of at least one ethylenically unsaturated monomer to give a polymer A1, said polymerization taking place in the presence of at least one polymer A2.

12. A bound substrate obtainable by treating a substrate with an aqueous polymer dispersion as claimed in any of claims 1 to 10 and then curing it.

13. A substrate as claimed in claim 12 in the form of a molding.

14. The use of an aqueous polymer dispersion as claimed in any of claims 1 to 10 as a binder for substrates, preferably moldings, with particular preference moldings made of fibrous or particulate materials, selected in particular from wood chips, wood fibers, textile fibers, glass fibers, mineral fibers, natural fibers, cork chips, and sand.

## Revendications

1. Dispersion aqueuse de polymères, contenant des particules de polymère dispersées d'un polymère A1, pouvant être obtenu au moyen d'une polymérisation en émulsion par voie radicalaire en présence d'un polymère A2, qui est formé de
- 50% à 99,5% en poids d'au moins un acide mono- et/ou dicarboxylique à insaturation éthylénique,
- 0,5% à 50% en poids d'au moins un composé à insaturation éthylénique qui est choisi parmi les esters d'acides monocarboxyliques à insaturation éthylénique et les hémi-esters et les diesters d'acides dicarboxyliques à insaturation éthylénique avec une amine présentant au moins un groupe hydroxyle,
- jusqu'à 20% en poids d'au moins un autre monomère.

2. Dispersion aqueuse de polymères selon la revendication 1, dans laquelle le polymère A2 contient, en tant qu'acide mono- et/ou dicarboxylique à insaturation éthylénique, au moins un composé choisi parmi les acides monocarboxyliques en C₃ à C₁₀ et les acides dicarboxyliques en C₄ à C₈, de préférence parmi l'acide acrylique, l'acide méthacrylique, l'acide crotonique, l'acide fumarique, l'acide maléique, l'acide 2-méthylmaléique et l'acide itaconique.

3. Dispersion aqueuse de polymères selon l'une quelconque des revendications précédentes, dans laquelle l'amine présentant au moins un groupe hydroxyle est choisie parmi les amines de formule générale
R^{c}NR^{a}R^{b}
dans laquelle
R^{c} représente un groupe alkyle en C₆ à C₂₂, alcényle en C₆ à C₂₂, aryle(alkyle en C₆ à C₂₂) ou aryle(alcényle en C₆ à C₂₂), le groupe alcényle pouvant présenter 1, 2 ou 3 doubles liaisons non vicinales,
R^{a} représente un groupe hydroxy(alkyle en C₁ à C₆) ou un groupe de formule II
-(CH₂CH₂O)ₓ(CH₂CH(CH₃)O)_{y}-H (II)
dans laquelle l'ordre des motifs oxyde d'alkylène est libre et x et y représentent, indépendamment l'un de l'autre, un nombre entier de 0 à 100, la somme de x et y étant supérieure à 1,
R^{b} représente un atome d'hydrogène, un groupe alkyle en C₁ à C₂₂, hydroxy(alkyle en C₁ à C₆), alcényle en C₆ à C₂₂, aryle(alkyle en C₆ à C₂₂), aryle(alcényle en C₆ à C₂₂) ou cycloalkyle en C₅ à C₈, le groupe alcényle pouvant présenter 1, 2 ou 3 doubles liaisons non vicinales, ou bien R^{b} représente un groupe de formule III
-(CH₂CH₂O)ᵥ(CH₂CH(CH₃)O)_{w}-H (II)
dans laquelle l'ordre des motifs oxydes d'alkylène est libre et v et w représentent, indépendamment
l'un de l'autre, un nombre entier de 0 à 100, et des mélanges de celles-ci.

4. Dispersion aqueuse de polymères selon l'une quelconque des revendications précédentes, dans laquelle le rapport pondéral, sur la base des matières solides, du polymère A1 au polymère A2 va de 7:1 à 1:7, de préférence de 3:1 à 1:3.

5. Dispersion aqueuse de polymères selon l'une quelconque des revendications précédentes, qui contient en outre jusqu'à 50% en poids, par rapport au polymère A2, d'au moins une amine de formule
_{R}c_{NR}a_{R}b
telle que définie dans la revendication 3.

6. Dispersion aqueuse de polymères selon l'une quelconque des revendications précédentes, qui contient en outre un agent réticulant d'amine ou d'amide comprenant au moins deux groupes hydroxyle.

7. Dispersion aqueuse de polymères selon l'une quelconque des revendications précédentes, qui comprend en outre au moins un accélérateur de réaction.

8. Dispersion aqueuse de polymères selon la revendication 7, dans laquelle l'accélérateur de réaction est choisi parmi des composés contenant du phosphore, de préférence parmi l'acide hypophosphorique et ses sels alcalins et alcalino-terreux.

9. Dispersion aqueuse de polymères selon l'une quelconque des revendications précédentes, dans laquelle le polymère A1 est formé de
- 80% à 100% en poids, par rapport au poids total des monomères du polymère, d'au moins un monomère principal à insaturation éthylénique et
- jusqu'à 20% en poids, par rapport au poids total des monomères du polymère, d'au moins un comonomère à insaturation éthylénique.

10. Dispersion aqueuse de polymères selon l'une quelconque des revendications précédentes, contenant
- 70% à 50% en poids de polymère A1,
- 30% à 50% en poids de polymère A2,
- 0% à 10% en poids d'alkylamine alcoxylée tensioactive
- 0% à 20% en poids d'agents réticulants contenant des groupes hydroxyle, et
- 0% à 5% en poids d'accélérateurs de réaction.

11. Procédé de préparation d'une dispersion aqueuse de polymères selon l'une quelconque des revendications 1 à 10 au moyen d'une polymérisation en émulsion par voie radicalaire d'au moins un monomère à insaturation éthylénique pour former un polymère A1, dans lequel on réalise la polymérisation en présence d'au moins un polymère A2.

12. Substrat lié, pouvant être obtenu au moyen du traitement d'un substrat avec une dispersion aqueuse de polymères selon l'une quelconque des revendications 1 à 10 suivi d'un durcissement.

13. Substrat selon la revendication 12 sous la forme d'un corps moulé.

14. Utilisation d'une dispersion aqueuse de polymères selon l'une quelconque des revendications 1 à 10 en tant que liant pour des substrats, de préférence des corps moulés, de manière plus particulièrement préférée des corps moulés composés de matières fibreuses ou granulées, qui sont choisies, en particulier, parmi les copeaux de bois, les fibres de bois, les fibres textiles, les fibres de verre, les fibres minérales, les fibres naturelles, les copeaux de liège et le sable.
